# EUROPEAN PATENT APPLICATION

(11) **EP 3 343 360 A1**
(43) Date of publication of application: **04.07.2018**
(21) Application number: 17202934.0
(22) Date of filing: 21.11.2017
(51) Int. Cl.: G06F 9/32, G06F 8/41, G06F 9/38

(54) **APPARATUS AND METHODS OF DECOMPOSING LOOPS TO IMPROVE PERFORMANCE AND POWER EFFICIENCY**

(30) Priority: 28.12.2016 US 201615392626
(71) Applicant: INTEL Corporation, Santa Clara, CA 95054 (US)
(72) Inventor: SCHERBININ, Sergey P., 249032 Obninsk (RU); IYER, Jayesh, Santa Clara, CA California 95054 (US); OSTANEVICH, Alexander Y., 121614 Moscow (RU); MASLENNIKOV, Dmitry, 123182 Moscow (RU); MOTIN, Denis G., 125635 Moscow (RU); ERMOLOVICH, Alexander V., 127473 Moscow (RU); CHUDNOVETS, Andrey, 108800 Moscow (RU); ROZHKOV, Sergey A., San Jose, CA California 95120 (US); BABAYAN, Boris A., 119296 Moscow (RU)
(74) Representative: Samson & Partner Patentanwälte mbB

(57) **Abstract**

Embodiments described herein relate to apparatus and methods for decomposing loops to improve performance and power efficiency. In one embodiment, a processor includes: a loop accelerator including a plurality of strand execution circuits, a binary translator to: receive a plurality of instructions from an instruction storage, to determine whether the plurality of instructions include loop instructions, and, in response to determining that they do, to divide the loop instructions into two or more jobs using at least one job creation rule, to assign the two or more jobs to two or more strands using at least one strand creation rule, and to cause the loop accelerator to execute at least two of the two or more strands in parallel using the plurality of strand execution circuits.

## Description

### Technical Field

Embodiments described herein generally relate to the field of computing and, more specifically, to apparatus and methods for decomposing loops to improve performance and power efficiency.

### Background Information

The presence of loops in programs is a source of significant amount of instruction-level parallelism (ILP). Different architectures try to exploit the benefits of the inter-iteration parallelism. But some approaches are limited in their scope and application, insofar as solutions utilizing multiple threads deal only with loops either with completely independent iterations or with non-ordered explicitly synchronized cross-iteration communications going through memory.

### BRIEF DESCRIPTION OF THE DRAWINGS

The various advantages of the embodiments disclosed herein will become apparent to one skilled in the art by reading the following specification and appended claims, and by referencing the drawings, in which:
**Figure 1** is a block diagram illustrating a processor using a loop accelerator to improve loop power usage and performance, according to some embodiments;
**Figure 2A** is a flow diagram of a process performed by a binary translator using a loop accelerator to improve loop power usage and performance, according to some embodiments;
**Figure 2B** is a flow diagram of a process performed by a processor using a loop accelerator to improve loop power usage and performance, according to some embodiments;
**Figure 3** is a block diagram illustrating a processor containing a binary translator and using a loop accelerator to improve loop power usage and performance, according to some embodiments;
**Figure 4** is a block diagram illustrating a computing system including a processor using a loop accelerator, with a binary translator implemented external to the processor, to improve loop power usage and performance, according to some embodiments;
**Figure 5A** is pseudocode illustrating a loop being decomposed into multiple jobs, according to some embodiments;
**Figure 5B** is a block diagram illustrating a loop being decomposed into multiple jobs, according to some embodiments;
**Figure 6** is pseudocode and a block diagram illustrating a loop being decomposed into multiple jobs, according to some embodiments;
**Figure 7** is pseudocode and a block diagram illustrating a loop being decomposed into multiple jobs, according to some embodiments;
**Figure 8** is pseudocode and a block diagram illustrating a loop being decomposed into multiple jobs, according to some embodiments;
**Figure 9** is pseudocode and a block diagram illustrating a loop being decomposed into multiple jobs, according to some embodiments;
**Figures 10A-10B** are block diagrams illustrating a generic vector friendly instruction format and instruction templates thereof according to embodiments of the invention;

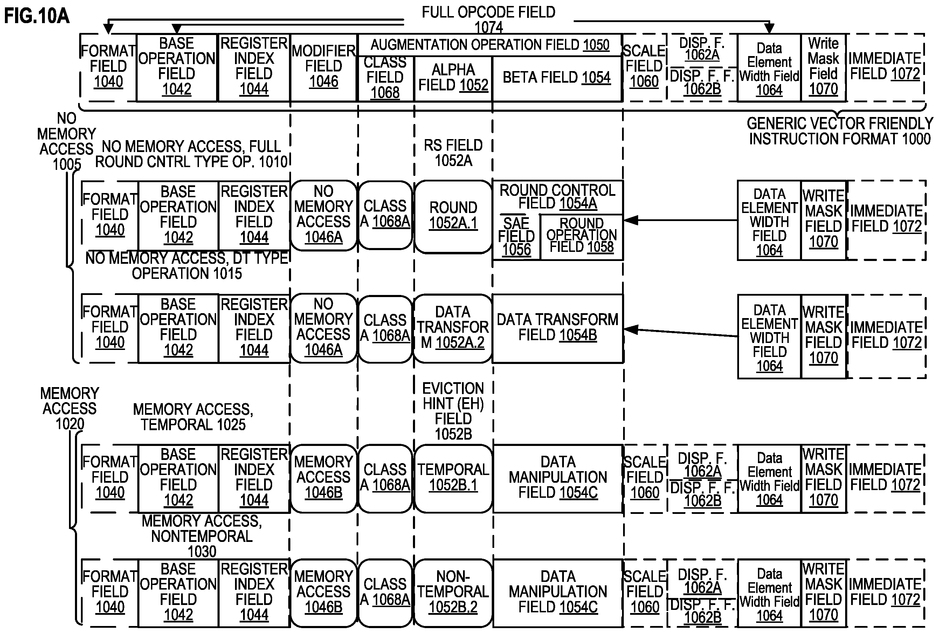

**Figure 10A** is a block diagram illustrating a generic vector friendly instruction format and class A instruction templates thereof according to embodiments of the invention;

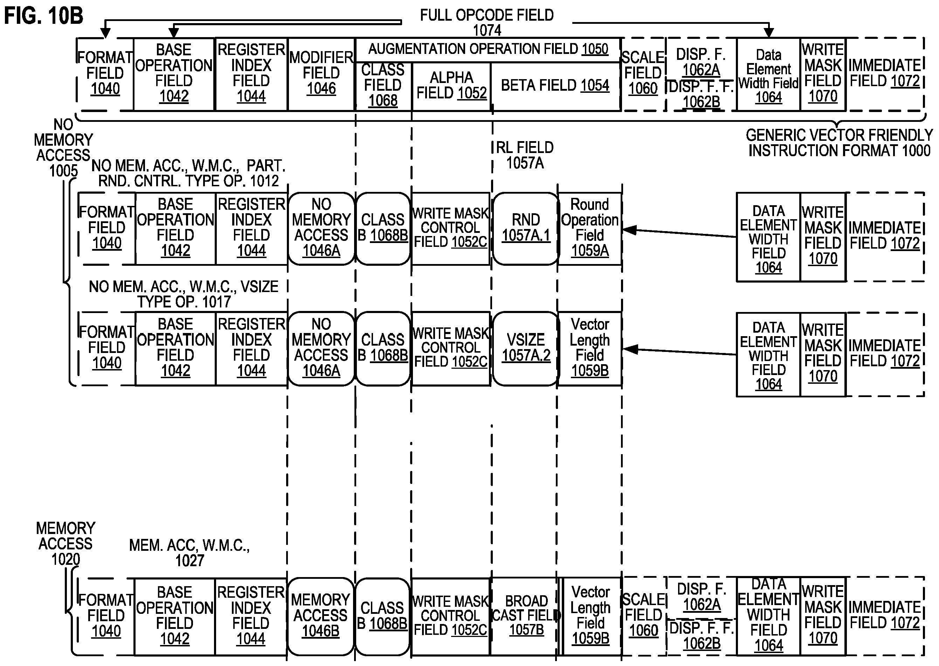

**Figure 10B** is a block diagram illustrating the generic vector friendly instruction format and class B instruction templates thereof according to embodiments of the invention;

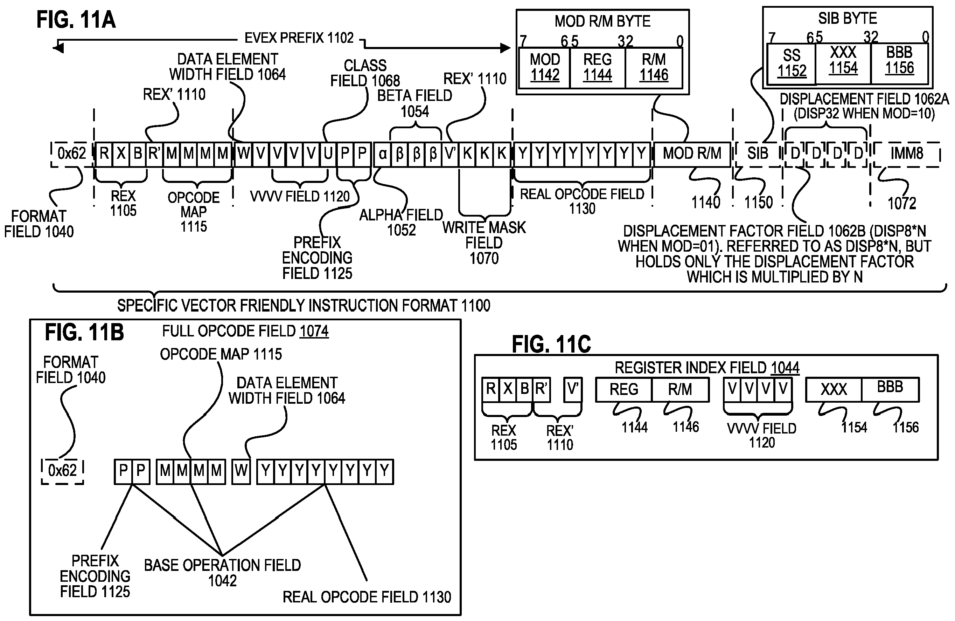

**Figure 11A** is a block diagram illustrating an exemplary specific vector friendly instruction format according to embodiments of the invention;
**Figure 11B** is a block diagram illustrating the fields of the specific vector friendly instruction format 1100 that make up the full opcode field 1074 according to one embodiment of the invention;
**Figure 11C** is a block diagram illustrating the fields of the specific vector friendly instruction format 1100 that make up the register index field 1044 according to one embodiment of the invention;

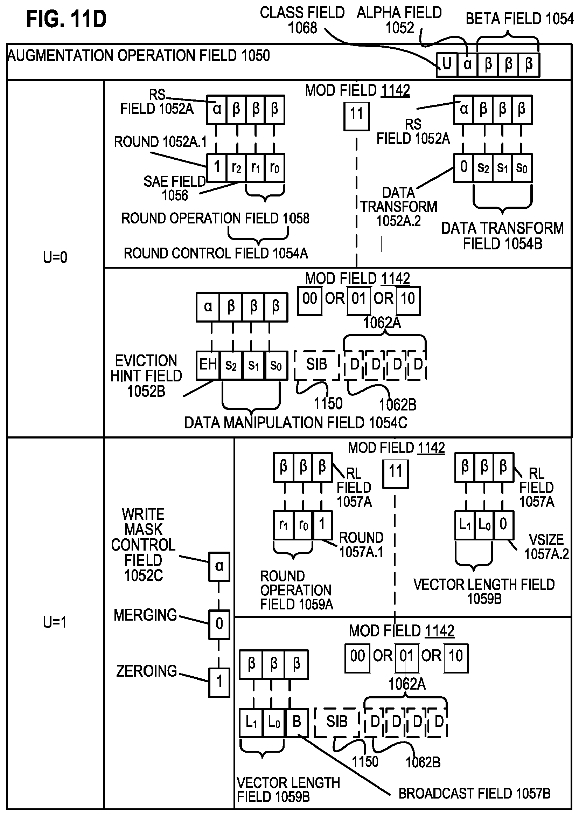

**Figure 11D** is a block diagram illustrating the fields of the specific vector friendly instruction format 1100 that make up the augmentation operation field 1050 according to one embodiment of the invention;

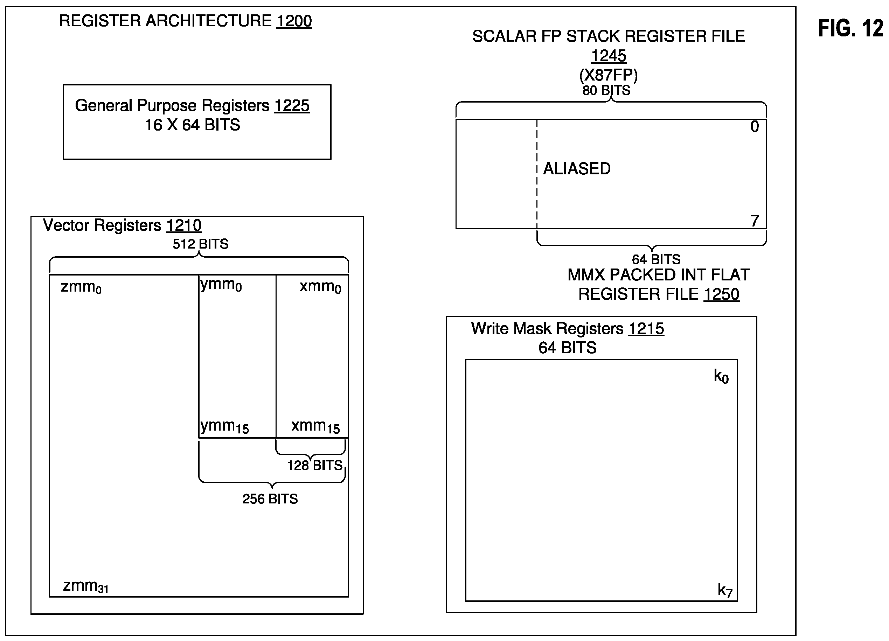

**Figure 12** is a block diagram of a register architecture 1200 according to one embodiment of the invention;

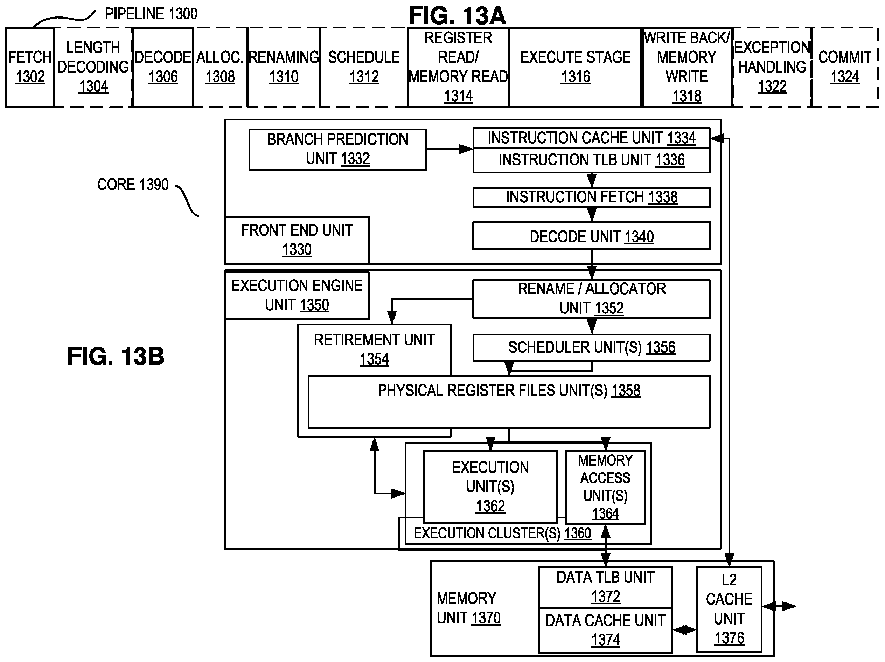

**Figure 13A** is a block diagram illustrating both an exemplary in-order pipeline and an exemplary register renaming, out-of-order issue/execution pipeline according to embodiments of the invention;
**Figure 13B** is a block diagram illustrating both an exemplary embodiment of an in-order architecture core and an exemplary register renaming, out-of-order issue/execution architecture core to be included in a processor according to embodiments of the invention;

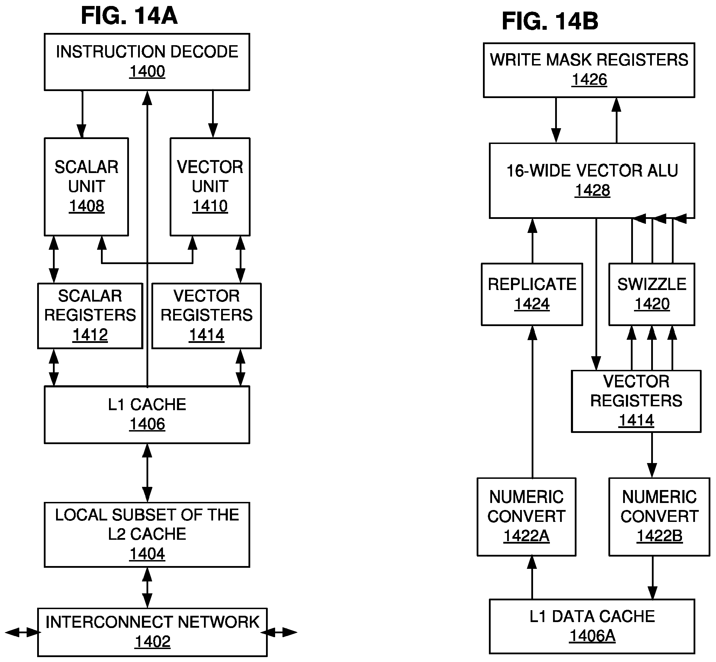

**Figures 14A-14B** illustrate a block diagram of a more specific exemplary in-order core architecture, which core would be one of several logic blocks (including other cores of the same type and/or different types) in a chip;
**Figure 14A** is a block diagram of a single processor core, along with its connection to the on-die interconnect network 1402 and with its local subset of the Level 2 (L2) cache 1404, according to embodiments of the invention;
**Figure 14B** is an expanded view of part of the processor core in **Figure 14A** according to embodiments of the invention;

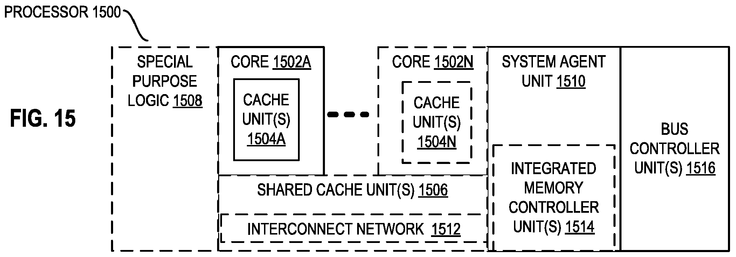

**Figure 15** is a block diagram of a processor 1500 that may have more than one core, may have an integrated memory controller, and may have integrated graphics according to embodiments of the invention;

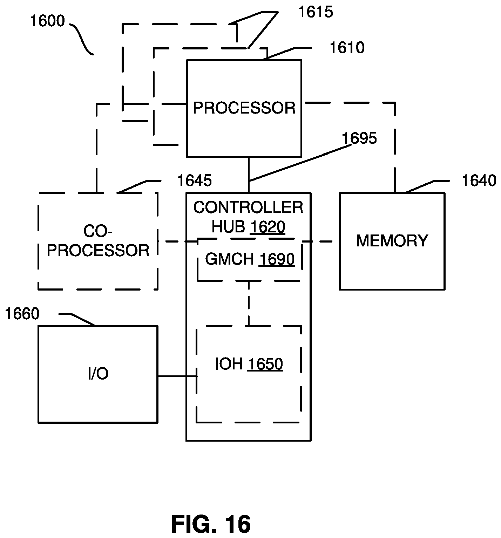

**Figures 16-19** are block diagrams of exemplary computer architectures;
**Figure 16** shows a block diagram of a system in accordance with one embodiment of the present invention;

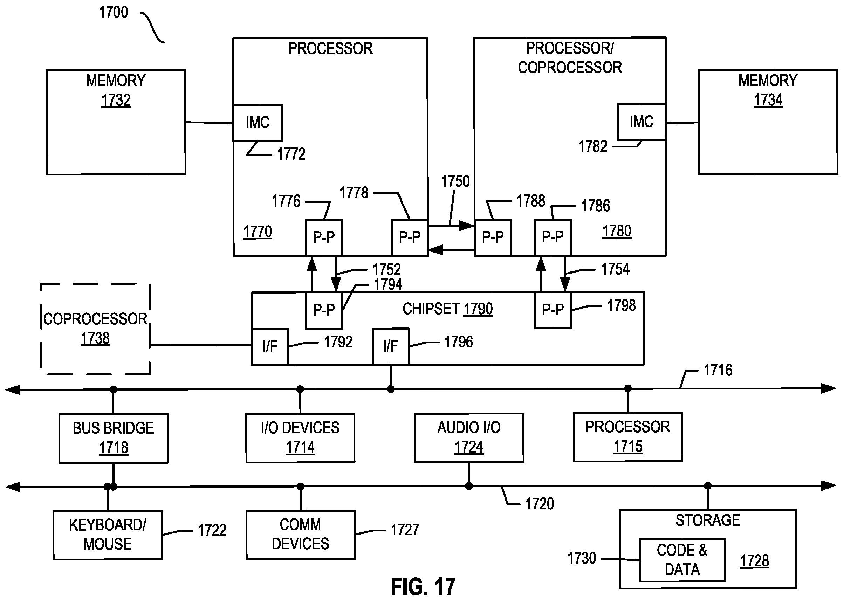

**Figure 17** is a block diagram of a first more specific exemplary system in accordance with an embodiment of the present invention;

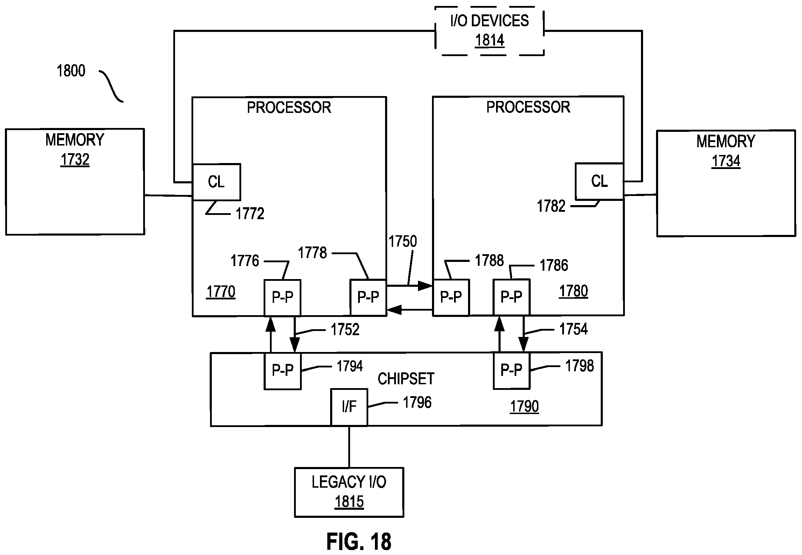

**Figure 18** is a block diagram of a second more specific exemplary system in accordance with an embodiment of the present invention;

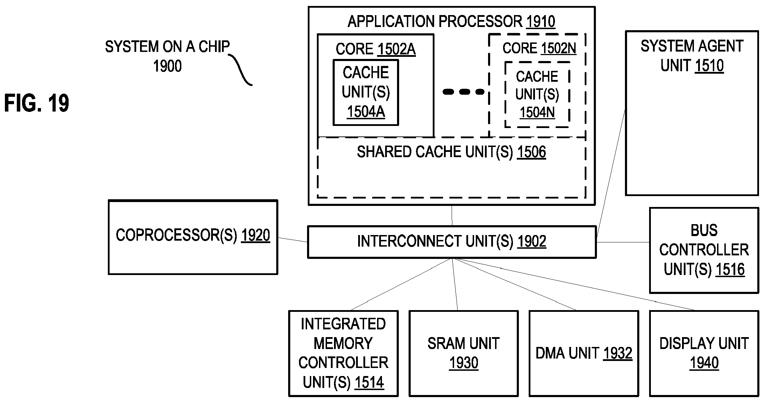

**Figure 19** is a block diagram of a SoC in accordance with an embodiment of the present invention; and

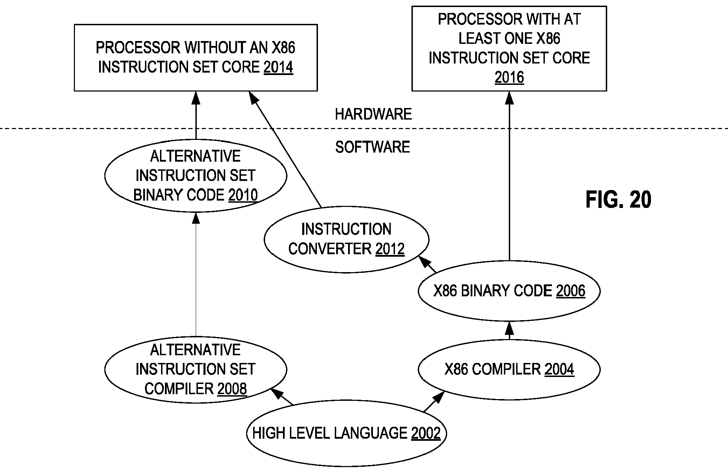

**Figure 20** is a block diagram contrasting the use of a software instruction converter to convert binary instructions in a source instruction set to binary instructions in a target instruction set according to embodiments of the invention.

### DETAILED DESCRIPTION OF THE EMBODIMENTS

In the following description, numerous specific details are set forth. However, it is understood that embodiments of the disclosure are practiced without these specific details. In other instances, well-known circuits, structures and techniques have not been shown in detail to not obscure the understanding of this description.

References in the specification to "one embodiment," "an embodiment," "an example embodiment," etc., indicate that the embodiment described includes a feature, structure, or characteristic, but every embodiment does not necessarily include the feature, structure, or characteristic. Moreover, such phrases are not necessarily referring to the same embodiment. Further, when a feature, structure, or characteristic is described about an embodiment, it is submitted that it is within the knowledge of one skilled in the art to affect such feature, structure, or characteristic about other embodiments whether explicitly described.

Various operations may be described as multiple discrete actions or operations in turn, in a manner that is most helpful in understanding the claimed subject matter. However, the order of description should not be construed as to imply that these operations are necessarily order dependent. In particular, at least some operations may be performed other than in the order presented. Operations described may be performed in a different order than the described embodiment. Various additional operations may be performed and/or described operations may be omitted in additional embodiments.

Some attempts to exploit the benefits of inter-iteration parallelism among loops suffer from certain limitations. For example, some multi-threaded processors are able to process multiple threads, but are only able to process loops that have completely independent iterations. The number and variety of loops that such solutions can process is limited.

Disclosed embodiments are not so limited, which helps to increase the coverage and hence scope of their application. Disclosed embodiments increase the speed of loops execution by means of a loop accelerator to execute multiple asynchronously working, tightly coupled micro threads (strands). In some embodiments, the disclosed loop accelerator is able to efficiently execute loops and loop nests with and without cross-iteration dependencies being shared through registers and memory.

As used herein, a strand or micro-thread is a sequence of instructions arranged by a binary translator (e.g., at program compilation time for the hot loops identified), where instructions belonging to the same strand or micro-thread are to be executed by the hardware in-order.

As used herein, a multi-strand out-of-order loop accelerator (sometimes referred to herein simply as a multi-strand loop processor or loop accelerator) is an accelerator that processes multiple strands or micro-threads created by a binary translator in parallel such that: (1) instructions of a strand or micro-thread may be fetched, issued, and executed out of program order with respect to instructions of different strands or micro-threads and (2) all but memory and interruptible instructions may be committed (retired) out of program order.

Embodiments disclosed herein describe techniques for identifying and translating loop code contained in a program code stream (e.g., x86 code) by a binary translator to allow efficient utilization of both iteration-level and instruction-level parallelisms naturally existing in loops. In some embodiments, the binary translator prepares the loop code (which has enough iteration-level parallelism) and offloads it to be executed on the multi-strand loop accelerator, while a main processor executes the rest of the code. With the aid of the binary translator, the loop accelerator can implement strand-based software pipelining.

A first aspect of some embodiments disclosed herein is the creation of jobs/strands by a binary translator, based on the characteristic of loop code as well as potential for extracting parallelism. Binary translator techniques for exploiting parallelism on multiple levels of granularity and utilizing unique features of a strand-based architecture are utilized.

A second aspect of some embodiments disclosed herein is construction of a data-flow pipeline for loop execution by means of strands and organization of cross-strand communication through a common register file.

A third aspect of some embodiments disclosed herein is creation of strand documentation for each strand. A hardware buffer per strand carries information to distinguish a strand and its dynamic instance through multiple execution iterations.

A fourth aspect of some embodiments disclosed herein is a plurality of instructions placed in code translated by a binary translator. In some embodiments, the plurality of instructions is used to control how the loop accelerator is to process strands. In some embodiments, the plurality of instructions is used to control how the strand documentation is to be updated over its lifetime.

According to some embodiments, arbitrarily loopy program code is divided into strands for parallel execution on a plurality of execution units of the loop accelerator. More specifically, a binary translator in some embodiments identifies loops in the program code and divides the loop code into jobs by applying at least one job creation rule, as further described below. Furthermore, in some embodiments, the binary translator groups the jobs into one or more stages by applying at least one stage creation rule, as further described below. Furthermore, in some embodiments, each of the jobs is assigned to at least one strand by applying at least one strand creation rule, as further described below. In such embodiments, the loop accelerator manages execution of the strands using a plurality of execution circuits in a strand-based architecture. As further detailed below, the at least one job creation rule, the at least one stage creation rule, and the at least one strand creation rule together aim to achieve at least one of reaching a dominant critical recurrent dependence chain (if any), maximizing utilization of the plurality of execution circuits, minimizing idle time of any of the plurality of execution circuits, reducing a number of dependences among strands, balancing execution rates of the plurality of strands, and otherwise improving loop performance and power utilization.

An advantage of some embodiments disclosed herein is that they efficiently parallelize loops that exist in code on an iteration-level, including loops and loop nests with recurrent and nonrecurrent cross-iteration dependencies being shared through registers and memory.

Another advantage of embodiments disclosed herein is that they can be scaled to 1, 2, 4 or more loop accelerator clusters to build a system able to execute single-threaded (ST) or multi-threaded (MT) arbitrarily loopy code with improved loop power usage and performance.

Yet another advantage of embodiments disclosed herein is that they support a power efficient design which is capable of at least some reduction of energy per instruction.

Other advantages will be apparent to one having ordinary skill in the art from the disclosure provided herein.

### Loop Accelerator

Embodiments disclosed herein provide a loop accelerator processor, which is able to execute asynchronously, with the help of the binary translator which places instructions into different strands or micro-threads that can be executed in parallel. The multiple micro-threads (strands) communicate with each other through a common register file. The loop accelerator executes instructions of the same strand sequentially (in-order) while instructions of different strands can be executed out-of-order if there are no dependencies between them (e.g., data flow dependencies) preventing such potential re-ordering. Note, that presence of dependent instructions in two strands imposes only ordering of said instructions, not the entire strands which can still run in parallel. At any clock, the loop accelerator processor checks the current instructions of all strands to determine whether any of them is ready for execution, and, if so, dispatches to execution ports instructions which don't have blocking dependencies.

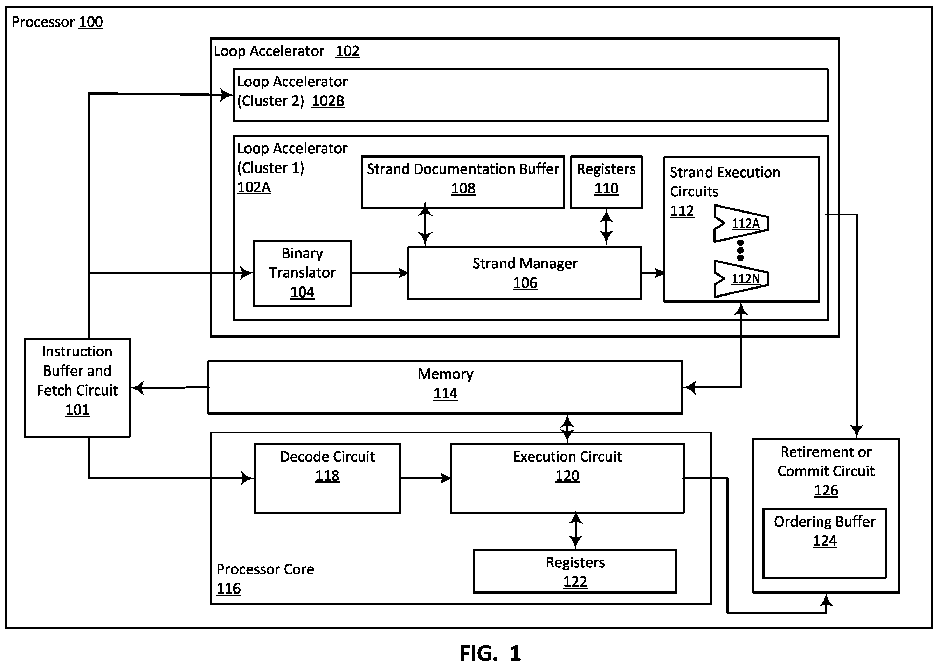

**Figure 1** is a block diagram of a system in which improving processor power-performance using a binary translator is implemented, according to some embodiments. As shown, processor 100 includes processor core 116 and loop accelerator 102 implemented as one or more clusters 102A 102B, instruction buffer and fetch circuit 101, binary translator 104, execution circuits 112 and 120, registers 110 and 122, memory 114, ordering buffer 124, and retire or commit circuit 126.

In some embodiments, processor core 116 is a conventional processor. In some embodiments, processor core 116 is a conventional processor that supports an x86 instruction set architecture. In some embodiments, processor core 116 is any one of the processors and processor cores described below, at least with respect to **Figures 13****,** **15****,** and **20****.**

In operation, an instruction is input from instruction buffer and fetch circuit 101, which comprises a cache memory, an on-chip memory, a memory on the same die as the processor, an instruction register, a general register, or system memory, without limitation. Instruction buffer and fetch circuit 101, which comprises a cache memory, an on-chip memory, a memory on the same die as the processor, an instruction register, a general register, or system memory, therefore represent examples of means for receiving a plurality of instructions from an instruction storage. Decode circuit 118 decodes the instruction. In one embodiment, the instruction comprises fields discussed further below, at least with respect to **Figures 10A-B****, and** **11A-C****.** The decoded instruction is executed by execution circuit 120. Execution circuit 120 is configured to read data from and write data to registers 122 and memory 114. Registers 122 comprise any one or more of a data register, an instruction register, a general register, and an on-chip memory. An embodiment of a register file is discussed below, at least with respect to **Figure 12****.** Memory 114 comprises any one or more of an on-chip memory, a memory on the same die as the processor, a memory in the same package as the processor, a cache memory, and system memory. Several exemplary embodiments of execution circuit 120 are described further below, at least with respect to **Figure 13A, Figure 13B****,** and **Figure 14****.** Retire or commit circuit 126 ensures that execution results are written to or have been written to their destinations, and frees up or releases resources for later use.

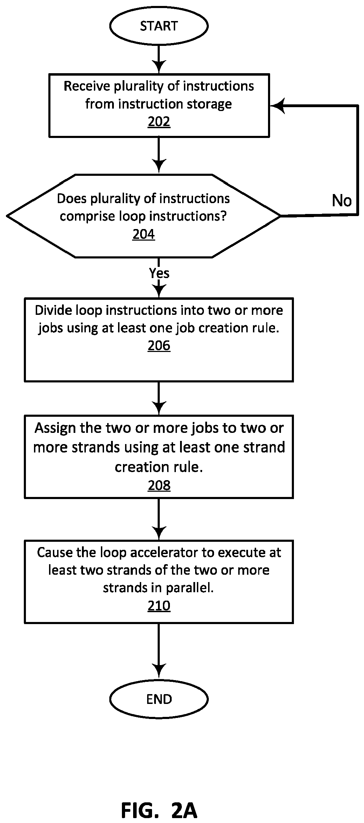

**Figure 2A** is a flow diagram of a process performed by a binary translator using a loop accelerator to improve loop power usage and performance, according to some embodiments. As shown, after starting, at 202 a plurality of instructions is fetched, for example from Instruction buffer and fetch circuit 101 **(****Figure 1****).** At 204, it is determined whether the plurality of instructions comprises loop instructions.

In operation, the binary translator may employ several different means for determining whether the plurality of instructions comprises loop instructions. For example, the plurality of instructions may include jump, branch, increment, and comparison opcodes sometimes associated with loop. For example, the binary translator may maintain a count of repetitions of an instruction, and thus empirically determine that the plurality of instructions comprises loop instructions. For example, the binary translator may monitor architectural registers of the processing core and determine that the plurality of instructions comprises a loop when any of the architectural registers are incrementing. For further example, the binary translator may notice code sequences that are to be associated with looping.

If the plurality of instructions does not comprise a loop, the process returns to 202 to again receive a plurality of instructions, for example from instruction buffer and fetch circuit 101 **(****Figure 1****).** But, if a loop is detected at 204, at 206, the binary translator is to divide the loop instructions into two or more jobs using at least one job creation rule, as described further below. At 208, the binary translator is to assign the two or more jobs to two or more strands using at least one strand creation rule, as described further below. At 210, the binary translator causes the loop accelerator to execute at least two strands of the two or more strands in parallel.

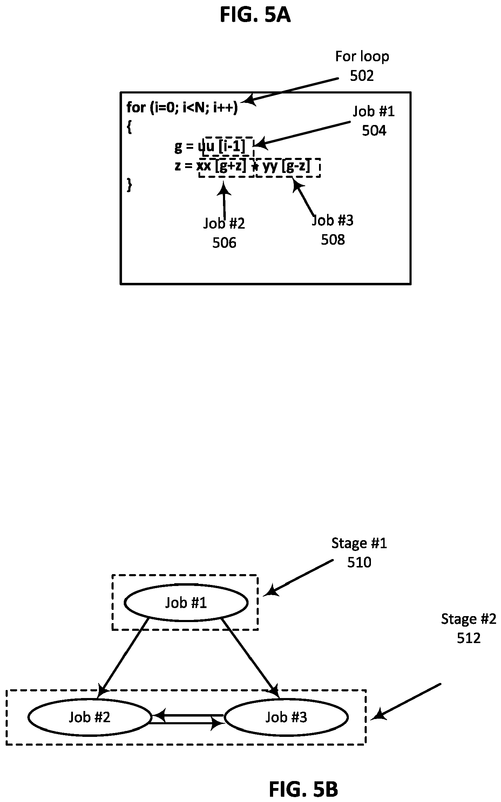

When the plurality of instructions comprises a loop, the binary translator is to employ means for dividing the loop instructions into two or more strands to be executed by the loop accelerator in parallel. Several examples of such means are described below with respect to **Figure 5A, Figure 5B****,** **Figure 6****,** **Figure 7****,** **Figure 8****,** and **Figure 9****,** and the associated specification text.

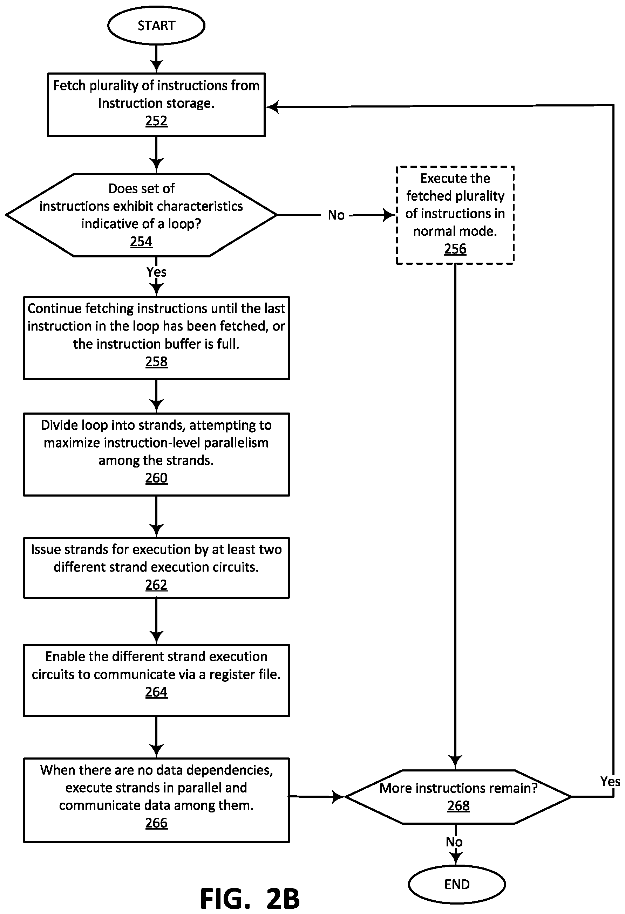

**Figure 2B** is a flow diagram of a process performed by a processor using a loop accelerator to improve loop power usage and performance, according to some embodiments. As shown, after starting, at 252 a plurality of instructions is fetched, for example from Instruction buffer and fetch circuit 101 **(****Figure 1****).** At 254, it is determined whether the plurality of instructions exhibits characteristics indicative of a loop. If not, at 256 the plurality of instructions is to be executed in normal mode, for example by processor core 116 **(****Figure 1****).** But, if a loop is detected at 254, at 258, the processor is to continue fetching instructions until the last instruction in the loop has been fetched, or the instruction buffer is full. At 260, the processor is to divide the loop into strands, attempting to maximize instruction-level parallelism among the strands. At 262, the loop accelerator is to issue strands for execution by at least two different strand execution circuits. At 264, the loop accelerator, for example, loop accelerator 102 **(****Figure 1****),** is to configure the different strand execution circuits to communicate using a common register file, for example, registers 110 **(****Figure 1****).** At 266, when there are no data dependencies among strands, the loop accelerator, for example, loop accelerator 102 **(****Figure 1****),** is to cause the strand execution circuits, for example, strand execution circuits 112 **(****Figure 1****),** to execute the strands in parallel. At 268, the processor is to determine whether more instructions remain, and, if so, return to 252 to fetch a plurality of instructions, for example from Instruction buffer and fetch circuit 101 **(****Figure 1****).** If it is determined at 268 that no more instructions remain, the process ends.

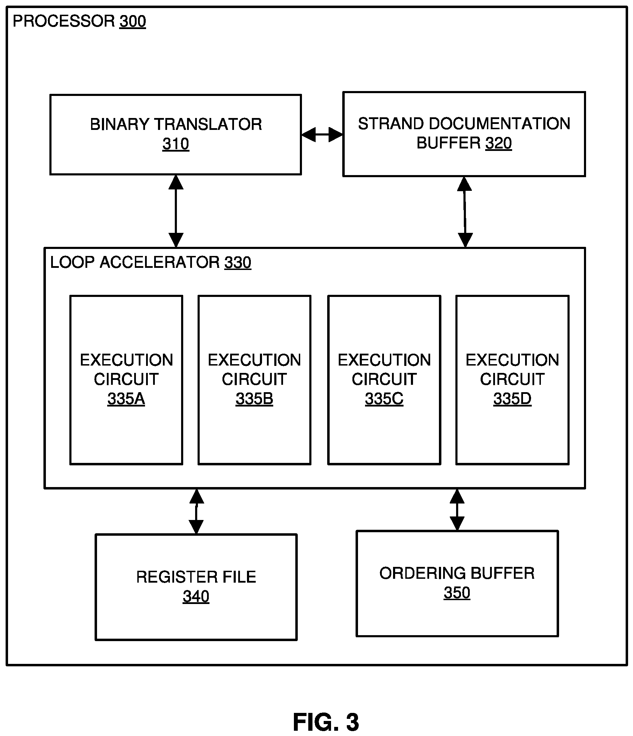

**Figure 3** is a block diagram illustrating a processor containing a binary translator and using a loop accelerator to improve loop power usage and performance, according to some embodiments. As shown in the diagram, the processor 300 includes binary translator 310, a strand documentation buffer 320, a loop accelerator 330, a register file 340, and an ordering buffer 350. Binary translator 310 translates program code (e.g., x86 binary) into code that can be run on the loop accelerator 330. Binary translator 310 may perform static analysis of the program code to identify any loops in the program code. Based on this static analysis, binary translator 310 may decompose the loops in the program code into one or more strands. A strand (which may also be referred to as a micro-thread) is a sequence of instructions arranged by binary translator 310, where instructions belonging to the same strand are to be executed by hardware in-order. As will be described in additional detail below, multiple strands can be executed in parallel by the loop accelerator 330 to accelerate loop execution, where instructions from different strands may be executed out-of-order. Binary translator 310 may create strands based on the characteristics of the loops in the program code. For example, binary translator 310 may create strands such that dependent instructions (e.g., dependent on register or memory) are placed in the same strand as other instructions they depend upon, while independent instructions are placed in separate strand. This allows the strand with the independent instructions to make progress even if the strand with the dependent instructions is stalled (e.g., because it is waiting for a memory access operation to complete).

In one embodiment, binary translator 310 is communicatively coupled to a strand documentation buffer 320 that stores strand documentation. In one embodiment, the strand documentation buffer 320 stores strand documentation for each strand (per strand) that is being executed by the loop accelerator 330. The strand documentation for a strand includes information regarding the properties of the strand. Although the strand documentation buffer 320 is described above as being a single buffer that includes strand documentation for all strands, it should be understood that other embodiments may provide a separate strand documentation buffer 320 (hardware buffer) per strand that is to store strand documentation for the corresponding strand. In one embodiment, the strand documentation for a strand includes an indication of an instruction pointer for the strand. The instruction pointer for a strand indicates the current instruction being executed by the strand (or the next instruction to be executed by the strand, depending on implementation). The strand-based architecture thus employs multiple instruction pointers (one per strand), which is in contrast to a typical superscalar processor that only employs a single instruction pointer. In one embodiment, the strand documentation for a strand includes an indication of an iteration number for the strand. The iteration number for the strand indicates the current loop iteration that is being executed by the strand. In one embodiment, the strand documentation for a strand includes an indication of a loop exit counter for the strand. The loop exit counter for the strand allows detection of a counted exit. In one embodiment, the strand documentation for a strand includes an indication of a register base for the strand. The register base for the strand indicates the set of registers that the strand can work with for the current loop iteration being executed by the strand. The strand documentation 320 for a strand may thus contain information that defines the current state of execution of the strand (e.g., which instruction is being executed, which iteration within the loop is being executed, and which registers the strand can work with). As such, different strands can execute the same program code (e.g., code within a loop body) in parallel, but for different loop iterations, depending on the values set in the strand documentation.

Binary translator 310 is communicatively coupled to the loop accelerator 330 and may provide strands to the loop accelerator 330 for execution. The loop accelerator 330 is a hardware component that is dedicated for accelerating loop execution. The loop accelerator 330 includes multiple execution circuits 335A-D to process multiple strands in parallel. As shown in the diagram, the loop accelerator 330 includes four execution circuits 335. As such, this loop accelerator 330 is able to process four strands in parallel. It should be understood that the loop accelerator 330 can include more or less execution circuits 335 than shown in the diagram. The loop accelerator 330 executes instructions belonging to the same strand sequentially (in-order). However, the loop accelerator 330 may execute instructions belonging to different strands non-sequentially (out-of-order) as long as there are no dependencies between them that prevent such parallelization. The loop accelerator 330 is communicatively coupled to a register file 340 that includes multiple registers. The loop accelerator 330 (and more specifically, the execution circuits 335 of the loop accelerator 330) may work with the registers of the register file 340 when executing instructions. The loop accelerator 330 is also communicatively coupled to an ordering buffer 350, which stores entries for load instructions to preserve their until they are ready to be retired.

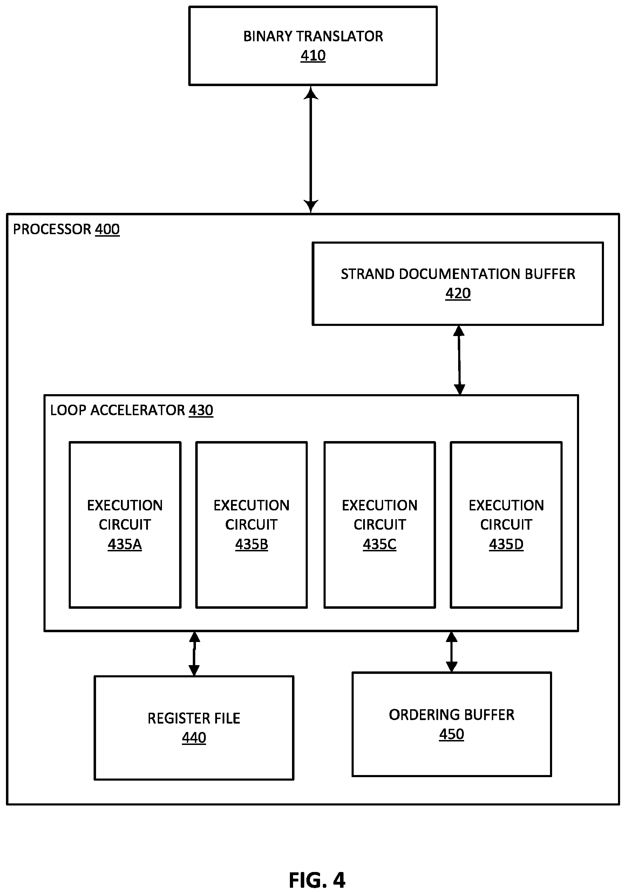

**Figure 4** is a block diagram illustrating a computing including a processor using a loop accelerator, with a binary translator implemented external to the processor, to improve loop power usage and performance, according to some embodiments. The system has similar components as the processor 100 shown in **Figure 3****:** processor 400 includes strand documentation buffer 420, loop accelerator 430, which includes execution circuits 435A-D, register file 440, and ordering buffer 450. Except, binary translator 410 is implemented external to the processor 400 (e.g., as a software implementation). It should be understood that the arrangement of components shown in the diagrams is provided by way of example and not limitation. Different embodiments may employ a different arrangement of components than shown in the diagrams.

In some embodiments, binary translator 410 constructs a data-flow pipeline for execution by the loop accelerator by means of strands and organization of cross-strand communication through a common register file.

### Strand Documentation

According to some embodiments, each strand has its own strand documentation which, as used herein, comprises data that allows differentiation of strands from each other. At every moment of time the strand documentation reflects the logical point of loop execution that the strand is currently executing. In particular, the strand documentation includes:
- IP (instruction pointer);
- Iteration number;
- Register bases (used to access common registers);
- Loop exit counter (allows detection of counted exit); and
- Program order (reflecting initial program order to organize sequential retirement).
Different strands can execute the same code, but since they have different documentation, they can work on different loop iterations.

### Strand-Control Instructions

In some embodiments, a binary translator inserts strand-control instructions in translated program code executed by the loop accelerator. The instructions, including START_STRANDS, CONFIGURE_STRAND, and ADVANCE_STRAND_DOCUMENTATION, affect how the loop accelerator manages execution of the strands.

**START_STRANDS:** In some embodiments, all strands which are needed for loop execution are created by means of a START_STRANDS instruction. For each generated strand this instruction sets the following fields in the strand documentation: 1) Instruction Pointer (IP), and 2) Iteration Number. So, after execution of START_STRANDS instructions, all strands know the IP and Iteration number to start executing from.

**CONFIGURE_STRAND:** In some embodiments, the first instruction to be executed by each strand is CONFIGURE_STRAND, which sets the following fields in the strand documentation: 1) Register Bases, 2) Loop Exit Counter, and 3) Program Order.

**ADVANCE_STRAND_DOCUMENTATION:** In some embodiments, when a strand finishes executing an iteration, it executes instruction ADVANCE_STRAND_DOCUMENATION and jumps to execution of next iteration which is assigned to it. This instruction advances the strand documentation pointing to next iteration, and sets the following fields: 1) Iteration Number, 2) Register Bases, 3) Loop Exit Counter, and 4) Program Order.

### TRANSLATION RULES APPLIED BY BINARY TRANSLATOR

According to some embodiments disclosed herein, a binary translator translates program code into translated program code and seeks to exploit parallelism on multiple levels of granularity. Disclosed embodiments seek to maximize execution speed and minimize power utilization for a given set of hardware resources executing arbitrarily loopy code.

### Jobs, Stages, and Strands

Jobs: a binary translator in some embodiments splits each loop iteration into several parts (jobs), each job consisting of one or more instructions or operations. Each instruction of the loop program code is to be included in at least one job. An instruction may also be replicated to be included in several jobs. If splitting produces only one job, then that job is to perform all instructions from the loop iteration.

**Figure 5A** is pseudocode illustrating a loop being decomposed into multiple jobs, according to some embodiments. As shown in **Figure 5A****,** the instructions that make up the body of the for () loop have been divided into three groups: job #1 504, job #2 506, and job #3 508. For example, iteration of loop at **Figure 5A** is split into three jobs.

**Stages:** Each job is included into a stage. Several jobs can be included into the same stage. Different stages contain different jobs. As used herein, a stage is sometimes referred to as a pipeline stage. **Figure 5B** is a block diagram illustrating a loop being decomposed into multiple jobs and multiple stages, according to some embodiments. As shown in **Figure 5B****,** a first stage 510 contains one job while a second stage 512 contains two jobs.

In some embodiments, both cross-stage and cross-job data communications are implemented as data transfers that go through a common register file. In some embodiments, a data flow pipeline is created by dividing a loop iteration into stages, or pipeline stages. In some embodiments, data hazards and data dependencies are dealt with by forwarding operands between pipeline stages using a register file as an intermediary.

**Strands:** Each job is executed by a separate set of one or more strands (different jobs are executed by different strands). Execution of a job means execution of instructions assigned to that job from all iterations of a loop. As used herein, if only one strand is given for execution of a job, then that strand executes all iterations of that job consequently starting from first one. As used herein, if more than one strand is given for execution of a job, then those strands execute iteration of a job in an interleaving manner: e.g., if two strands are given then the first strand executes all odd iterations while the second one executes all even iterations. If one or more jobs are executed by one or more strands then data transfers between those strands correspond to loop-carried data flows, and are implemented using a common register file.

### EXEMPLARY JOB CREATION RULES

In various embodiments, one or more rules are applied for dividing loop code into jobs. The various embodiments of job creation rules described below attempt to achieve at least one of reaching dominant critical recurrent dependence chain (if any), maximizing utilization of the plurality of execution circuits, minimizing idle time of any of the plurality of execution circuits, reducing a number of dependences among strands, balancing execution rates of the plurality of strands, and otherwise improving loop performance and power utilization.

### Exemplary Job Creation Rule #1

In some embodiments, one job creation rule calls for each loop recurrence that can affect a rate of loop execution (critical recurrence) to be split into separate jobs. In some embodiments, those jobs do not contain instructions not belonging to that critical recurrence. More than one job can be needed in order to parallelize execution of a recurrence on instruction level thereby achieving best possible execution speed.

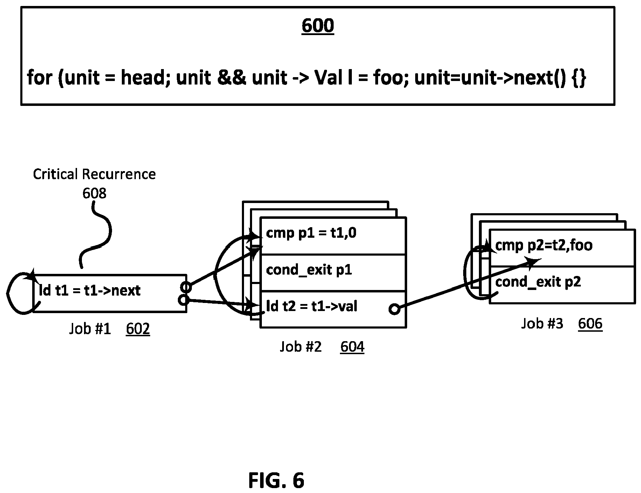

**Figure 6** is pseudocode and a block diagram illustrating a loop being decomposed into multiple jobs, according to some embodiments. As shown, the loop 600 is divided into job #1 602 with one instruction, job #2 604 with three instructions, and job #3 606 with two instructions. Job #1 602 in this embodiment is designated as a critical recurrence. In some embodiments, the binary translator can determine that an instruction is a critical instruction by analyzing one or more of its opcode, its operands, and its historical performance. As an example of Job Creation Rule #1, the only critical recurrence 608 is put into one job since one job is enough to ensure maximum execution speed for it.

### Exemplary Job Creation Rule #2

In some embodiments, a second job creation rule calls for each loop recurrence that can be run in parallel with other loop recurrences to be divided into its own job. That way, when multiple jobs from that rule stage are assigned to strands and executed by the loop execution circuits, they can be executed in parallel. In **Figure 5B****,** for example, two jobs are formed for execution of the recurrence of stage #2 512 since its instructions can run in parallel.

### Exemplary Job Creation Rule #3

In some embodiments, a third job creation rule calls for placing non-critical recurrence into a same job as other non-critical recurrences of a loop iteration.

### Exemplary Job Creation Rule #4

In some embodiments, a fourth job creation rule calls for forming an artificial critical recurrence consisting of the union of several non-critical recurrences and/or instructions contained in non-critical recurrent sequences of instructions.

### Exemplary Job Creation Rule #5

In some embodiments, a fifth job creation rule calls for forming a job to contain a nested loop or inner loop. In some embodiments, such a job can be treated as a critical recurrence. In some embodiments, such a job can be joined into a stage containing other jobs that can be run in parallel.

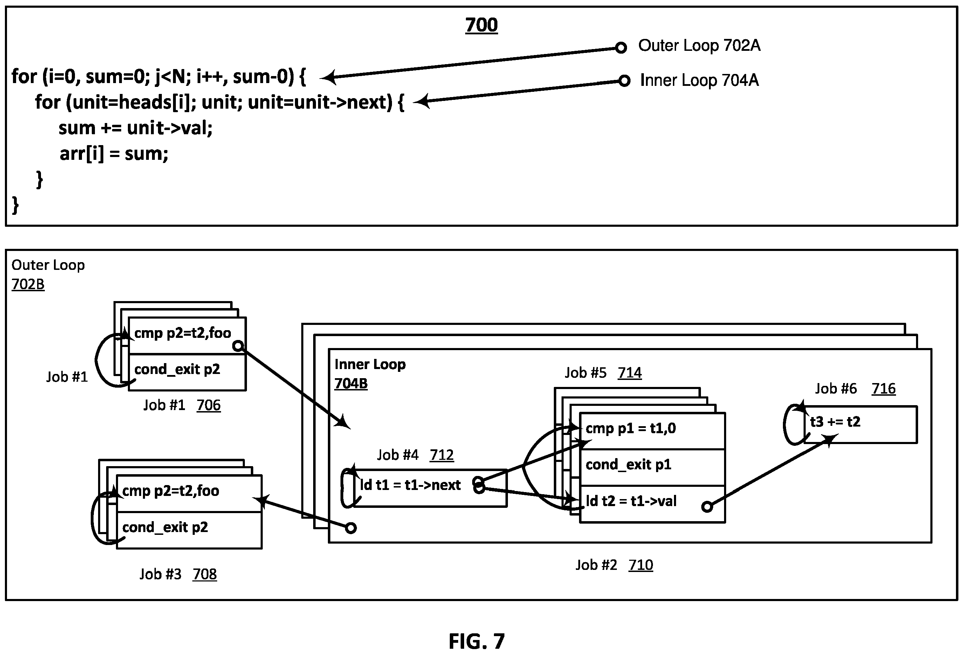

**Figure 7** is pseudocode and a block diagram illustrating a loop being decomposed into multiple jobs, according to some embodiments. As shown, loop 700 includes an outer loop 702A, B and an inner loop 704A, B. Outer loop 702B includes job #1 706 and job #3 708. As an example of Job Creation Rule #5, job #2 710 has been formed to contain inner loop 704B, which includes job #4 712, job #5 7142, and job #6 716.

### Exemplary Job Creation Rule #6

In some embodiments, a sixth job creation rule calls for isolating jobs that are likely to be delayed, for example by dynamic races for execution resources, to be isolated into separate jobs to avoid causing an artificial delay of other instructions in the job. Instructions which can be executed only on a few number of execution channels or have small execution throughput have a good chance to be delayed and are to be isolated into separate jobs according to Job Creation Rule #6. Otherwise, dynamic delay of such instructions leads to artificial delay of all other instructions following it in a job. In order to prevent such undesirable situations, instructions that have a good chance of incurring a delay are to be isolated in separate jobs which don't contain other important operations to be artificially delayed.

### Exemplary Job Creation Rule #7

In some embodiments, a seventh job creation rule calls for distributing the rest of the instructions among jobs in a way to minimize a number of cyclic dependencies between stages.

### Exemplary Job Creation Rule #8

In some embodiments, an eighth job creation rule calls for replicating an instruction into several jobs so as to decrease the amount of cross-job data dependencies.

### Exemplary Job Creation Rule #9

In some embodiments, a ninth job creation rule calls for splitting big jobs into smaller ones. For example, this can take place if only few iterations of a job fit parallelization window, which can be defined by size of a memory ordering buffer (MOB) for example, and iteration-level parallelism cannot be applied aggressively for the job. In some sense, such job forms a new artificial recurrence since its next iterations can't be executed until previous ones free MOB entries. If such recurrence becomes a critical one, then in order to speed up such a big job, it can be split into two or more lesser ones. This split resembles one performed for critical recurrences since both of them are done in order to exploit instruction-level parallelism in conditions of lack of iteration-level parallelism.

### Exemplary Job Creation Rule #10

The exemplary Job Creation Rules described above are to be used in some of the embodiments described herein. But additional Job Creation Rules can be implemented and applied in other embodiments. In some embodiments, a tenth job creation rule calls for seeking opportunities to group instructions into jobs so as to achieve at least one of reaching dominant critical recurrent dependence chain (if any), maximizing utilization of the plurality of execution circuits, minimizing idle time of any of the plurality of execution circuits, reducing a number of dependences among strands, balancing execution rates of the plurality of strands, and otherwise improving loop performance and power utilization.

### EXEMPLARY STAGE CREATION RULES

In various embodiments, one or more rules are applied for assigning jobs to stages. The various embodiments of stage creation rules described below attempt to achieve at least one of reaching dominant critical recurrent dependence chain (if any), maximizing utilization of the plurality of execution circuits, minimizing idle time of any of the plurality of execution circuits, reducing a number of dependences among strands, balancing execution rates of the plurality of strands, and otherwise improving loop performance and power utilization.

### Exemplary Stage Creation Rule #1

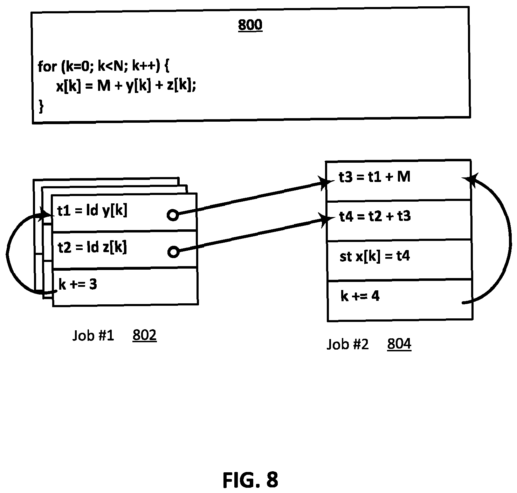

In some embodiments, a first stage creation rule calls for Instruction with long latency (e.g. 'ld' instruction which can miss cache) and its consumers are put in different stages. This rule enables minimization of dynamically idle strands when dealing with long latency instructions. For example, **Figure 8** is pseudocode and a block diagram illustrating a loop being decomposed into multiple jobs, according to some embodiments. As shown, for loop 800 is divided into job #1 802 and job #2 804. This rule is applied to the memory load 'ld' instruction of job #1 802.

### Exemplary Stage Creation Rule #2

In some embodiments, a second stage creation rule calls for placing producers and consumers of non-recurrent loop-carried data flow in different stages if producer includes instructions that are to be executed before the consumer in a control flow.

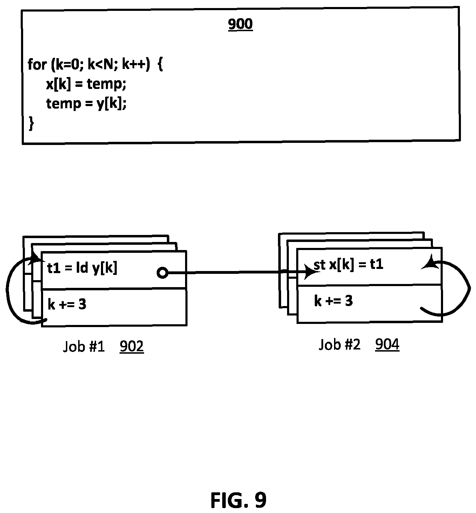

**Figure 9** is pseudocode and a block diagram illustrating a loop being decomposed into multiple jobs, according to some embodiments. As shown, loop 900 is divided into job #1 902 and job #2 904. As an example, Stage Creation Rule #2 is applied to loop-carried dependency between memory load 'LD' instruction of job #1 902 and memory store 'ST' instruction of job #2 904.

### Exemplary Stage Creation Rule #3

In some embodiments, a third stage creation rule calls for distributing the rest of the instructions among stages in a way to minimize cyclic dependencies between stages. Instructions can be replicated into several stages in order to decrease number of cross-stage data flows and dependences.

### Exemplary Stage Creation Rule #4

In some embodiments, a fourth stage creation rule calls for placing each loop recurrence into a stage as a whole.

### Exemplary Stage Creation Rule #5

In some embodiments, a fifth stage creation rule calls for each inner loop being placed in a stage as a whole.

### Exemplary Stage Creation Rule #6

The exemplary Stage Creation Rules described above are to be used in some of the embodiments described herein. But additional stage Creation Rules can be implemented and applied in other embodiments. In some embodiments, a sixth stage creation rule calls for seeking opportunities to group jobs into stages so as to achieve at least one of maximizing utilization of the plurality of execution circuits, minimizing idle time of reaching dominant critical recurrent dependence chain (if any), any of the plurality of execution circuits, reducing a number of dependences among strands, balancing execution rates of the plurality of strands, and otherwise improving loop performance and power utilization.

### STRAND CREATION RULES

In various embodiments, one or more rules are applied for assigning jobs to strands. The various embodiments of strand creation rules described below attempt to achieve at least one of reaching dominant critical recurrent dependence chain (if any), maximizing utilization of the plurality of execution circuits, minimizing idle time of any of the plurality of execution circuits, reducing a number of dependences among strands, balancing execution rates of the plurality of strands, and otherwise improving loop performance and power utilization.

### Exemplary Strand Creation Rule #1

In some embodiments, a first strand creation rule calls for balancing rates of all formed jobs in a loop nest (tries to equalize them). First, best possible (theoretical) rate of loop execution is calculated (in terms of "number of clocks per one iteration") basing on analysis of existing loop recurrences and per-iteration hardware resources (execution units, MOB occupancy, etc.).

Corresponding rates for inner loops are calculated as: RATE_INNER = RATE_OUTER / ITERS_NUM_INNER, where RATE_INNER is an execution rate of inner loop, RATE_OUTER is execution rate of outer loop; and ITERS_NUM_INNER is estimation of iteration number for inner loop (its trip count).

### Exemplary Strand Creation Rule #2

In some embodiments, a second strand creation rule calls for assigning a minimal number of strands to instructions that can be executed in parallel on an iteration level. The minimal number of strands is calculated as: STRANDS_NUM = ITER_TIME / RATE, where STRANDS_NUM is the minimal number of strands that can be assigned to a job, ITER_TIME is the amount of time used for execution of one iteration of that job by one strand, and RATE is the execution rate of a loop to which that job belongs. So, STRANDS_NUM or more strands are given to such jobs. This assignment ensures that a job will comply with execution rate of the whole pipeline. For example, in **Figure 9** both jobs have the same number of strands (3) since their ITER_TIME values are the same (2 clocks).

### Exemplary Strand Creation Rule #3

In some embodiments, a third strand creation rule calls for when a job cannot be parallelized on iteration level, then only one strand is given to it. In some embodiments, in order to comply with execution rate of the whole pipeline the following rule is met: ITER_TIME <= RATE, where ITER_TIME is amount of time needed for execution of one iteration of that job by one strand, and RATE is the execution rate of loop to which that job belongs. In some embodiments, when this rule is violated, some modification is introduced in order to balance it (e.g. assigning more than one strand to a job performing critical recurrence if critical path is not met with just one strand assigned). For example, to job #1 602 on **Figure 6** only one strand is given.

### Exemplary Strand Creation Rule #4

In some embodiments, a fourth strand creation rule calls for, when there are not enough strands to ensure proper rate for all jobs then pipeline can be reformed and/or execution rate of a loop can be slowed down. If a loop is recurrence-bound, then that critical recurrence is sped up to a limit by split to separate jobs, and if loop is resource-bounded then hardware is kept busy by lots of strands running in parallel. In both cases one of two natural limiters of execution speed is met.

### Exemplary Strand Creation Rule #5

The exemplary Strand Creation Rules described above are to be used in some of the embodiments described herein. But additional Strand Creation Rules can be implemented and applied in other embodiments. In some embodiments, a fifth stage creation rule calls for seeking opportunities to assign jobs to strands so as to achieve at least one of reaching dominant critical recurrent dependence chain (if any), maximizing utilization of the plurality of execution circuits, minimizing idle time of any of the plurality of execution circuits, reducing a number of dependences among strands, balancing execution rates of the plurality of strands, and otherwise improving loop performance and power utilization.

### NESTED LOOPS

In some embodiments, particular job/stage/strand creation rules are applied in the context of nested loop. Parallel execution of several iterations of such special job leads to parallel execution of several dynamic instances of inner loop included into job. For example, **Figure 7** shows outer loop 702B has 3 jobs (#1, #2 and #3), pipeline of inner loop 704B also has 3 jobs (#4, #5 and #6) which are included into job #2 of outer loop. In some embodiments, a job creation rule in such a scenario is to directly add the code of inner loop 704B to some job of outer loop.

In some embodiments, a job creation rule and a stage creation rule is applied to a nested loop as follows: 1) Construct pipeline for all inner loops. 2) Split iteration into one or several stages. 3) Split each stage into one or several jobs. And 4) If current loop is the outermost one in parallelized loop nest then assign strands to jobs of all loops belonging to considered loop nest

### Instruction Sets

An instruction set may include one or more instruction formats. A given instruction format may define various fields (e.g., number of bits, location of bits) to specify, among other things, the operation to be performed (e.g., opcode) and the operand(s) on which that operation is to be performed and/or another data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an Instruction Set Architecture (ISA) is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, September 2014; and see Intel® Advanced Vector Extensions Programming Reference, October 2014).

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

**Figures 10A-10B** are block diagrams illustrating a generic vector friendly instruction format and instruction templates thereof according to embodiments of the invention. **Figure 10A** is a block diagram illustrating a generic vector friendly instruction format and class A instruction templates thereof according to embodiments of the invention; while **Figure 10B** is a block diagram illustrating the generic vector friendly instruction format and class B instruction templates thereof according to embodiments of the invention. Specifically, a generic vector friendly instruction format 1000 for which are defined class A and class B instruction templates, both of which include no memory access 1005 instruction templates and memory access 1020 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 10A** include: 1) within the no memory access 1005 instruction templates there is shown a no memory access, full round control type operation 1010 instruction template and a no memory access, data transform type operation 1015 instruction template; and 2) within the memory access 1020 instruction templates there is shown a memory access, temporal 1025 instruction template and a memory access, non-temporal 1030 instruction template. The class B instruction templates in **Figure 10B** include: 1) within the no memory access 1005 instruction templates there is shown a no memory access, write mask control, partial round control type operation 1012 instruction template and a no memory access, write mask control, vsize type operation 1017 instruction template; and 2) within the memory access 1020 instruction templates there is shown a memory access, write mask control 1027 instruction template.

The generic vector friendly instruction format 1000 includes the following fields listed below in the order illustrated in **Figures 10A-10B****.**

Format field 1040 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1042 - its content distinguishes different base operations.

Register index field 1044 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1046 - its content distinguishes occurrences of instructions in the generic vector instruction format that specify memory access from those that do not; that is, between no memory access 1005 instruction templates and memory access 1020 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1050- its content distinguishes which one of a variety of different operations to be performed in addition to the base operation. This field is context specific. In one embodiment of the invention, this field is divided into a class field 1068, an alpha field 1052, and a beta field 1054. The augmentation operation field 1050 allows common groups of operations to be performed in a single instruction rather than 2, 3, or 4 instructions.

Scale field 1060 - its content allows for the scaling of the index field's content for memory address generation (e.g., for address generation that uses 2scale * index + base).

Displacement Field 1062A- its content is used as part of memory address generation (e.g., for address generation that uses 2scale * index + base + displacement).

Displacement Factor Field 1062B (note that the juxtaposition of displacement field 1062A directly over displacement factor field 1062B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1074 (described later herein) and the data manipulation field 1054C. The displacement field 1062A and the displacement factor field 1062B are optional in the sense that they are not used for the no memory access 1005 instruction templates and/or different embodiments may implement only one or none of the two.

Data element width field 1064 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1070 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1070 allows for partial vector operations, including loads, stores, arithmetic, logical, etc. While embodiments of the invention are described in which the write mask field's 1070 content selects one of a number of write mask registers that contains the write mask to be used (and thus the write mask field's 1070 content indirectly identifies that masking to be performed), alternative embodiments instead or additional allow the mask write field's 1070 content to directly specify the masking to be performed.

Immediate field 1072 - its content allows for the specification of an immediate. This field is optional in the sense that is it not present in an implementation of the generic vector friendly format that does not support immediate and it is not present in instructions that do not use an immediate.

Class field 1068 - its content distinguishes between different classes of instructions. With reference to **Figures 10A-B****,** the contents of this field select between class A and class B instructions. In **Figures 10A-B****,** rounded corner squares are used to indicate a specific value is present in a field (e.g., class A 1068A and class B 1068B for the class field 1068 respectively in **Figures 10A-B**).

In the case of the non-memory access 1005 instruction templates of class A, the alpha field 1052 is interpreted as an RS field 1052A, whose content distinguishes which one of the different augmentation operation types are to be performed (e.g., round 1052A.1 and data transform 1052A.2 are respectively specified for the no memory access, round type operation 1010 and the no memory access, data transform type operation 1015 instruction templates), while the beta field 1054 distinguishes which of the operations of the specified type is to be performed. In the no memory access 1005 instruction templates, the scale field 1060, the displacement field 1062A, and the displacement scale filed 1062B are not present.

In the no memory access, full round control type operation 1010 instruction template, the beta field 1054 is interpreted as a rounding control field 1054A, whose content(s) provide static rounding. While in the described embodiments of the invention the rounding control field 1054A includes a suppress all floating point exceptions (SAE) field 1056 and a rounding operation control field 1058, alternative embodiments may support may encode both these concepts into the same field or only have one or the other of these concepts/fields (e.g., may have only the round operation control field 1058).

SAE field 1056 - its content distinguishes whether or not to disable the exception event reporting; when the SAE field's 1056 content indicates, suppression is enabled, a given instruction does not report any kind of floating-point exception flag and does not raise any floating point exception handler.

Round operation control field 1058- its content distinguishes which one of a group of rounding operations to perform (e.g., Round-up, Round-down, Round-towards-zero and Round-to-nearest). Thus, the round operation control field 1058 allows for the changing of the rounding mode on a per instruction basis. In one embodiment of the invention where a processor includes a control register for specifying rounding modes, the round operation control field's 1050 content overrides that register value.

In the no memory access data transform type operation 1015 instruction template, the beta field 1054 is interpreted as a data transform field 1054B, whose content distinguishes which one of a number of data transforms is to be performed (e.g., no data transform, swizzle, broadcast).

In the case of a memory access 1020 instruction template of class A, the alpha 1052 is interpreted as an eviction hint field 1052B, whose content distinguishes which one of the eviction hints is to be used (in **Figure 10A****,** temporal 1052B.1 and non-temporal 1052B.2 are respectively specified for the memory access, temporal 1025 instruction template and the memory access, non-temporal 1030 instruction template), while the beta field 1054 is interpreted as a data manipulation field 1054C, whose content distinguishes which one of a number of data manipulation operations (also known as primitives) is to be performed (e.g., no manipulation; broadcast; up conversion of a source; and down conversion of a destination). The memory access 1020 instruction templates include the scale field 1060, and optionally the displacement field 1062A or the displacement scale field 1062B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

Temporal data is data likely to be reused soon enough to benefit from caching. This is, however, a hint, and different processors may implement it in different ways, including ignoring the hint entirely.

Non-temporal data is data unlikely to be reused soon enough to benefit from caching in the 1st-level cache and should be given priority for eviction. This is, however, a hint, and different processors may implement it in different ways, including ignoring the hint entirely.

In the case of the instruction templates of class B, the alpha field 1052 is interpreted as a write mask control (Z) field 1052C, whose content distinguishes whether the write masking controlled by the write mask field 1070 should be a merging or a zeroing.

In the case of the non-memory access 1005 instruction templates of class B, part of the beta field 1054 is interpreted as an RL field 1057A, whose content distinguishes which one of the different augmentation operation types are to be performed (e.g., round 1057A.1 and vector length (VSIZE) 1057A.2 are respectively specified for the no memory access, write mask control, partial round control type operation 1012 instruction template and the no memory access, write mask control, VSIZE type operation 1017 instruction template), while the rest of the beta field 1054 distinguishes which of the operations of the specified type is to be performed. In the no memory access 1005 instruction templates, the scale field 1060, the displacement field 1062A, and the displacement scale filed 1062B are not present.

In the no memory access, write mask control, partial round control type operation 1010 instruction template, the rest of the beta field 1054 is interpreted as a round operation field 1059A and exception event reporting is disabled (a given instruction does not report any kind of floating-point exception flag and does not raise any floating point exception handler).

Round operation control field 1059A - just as round operation control field 1058, its content distinguishes which one of a group of rounding operations to perform (e.g., Round-up, Round-down, Round-towards-zero and Round-to-nearest). Thus, the round operation control field 1059A allows for the changing of the rounding mode on a per instruction basis. In one embodiment of the invention where a processor includes a control register for specifying rounding modes, the round operation control field's 1050 content overrides that register value.

In the no memory access, write mask control, VSIZE type operation 1017 instruction template, the rest of the beta field 1054 is interpreted as a vector length field 1059B, whose content distinguishes which one of a number of data vector lengths is to be performed on (e.g., 128, 256, or 512 byte).

In the case of a memory access 1020 instruction template of class B, part of the beta field 1054 is interpreted as a broadcast field 1057B, whose content distinguishes whether or not the broadcast type data manipulation operation is to be performed, while the rest of the beta field 1054 is interpreted the vector length field 1059B. The memory access 1020 instruction templates include the scale field 1060, and optionally the displacement field 1062A or the displacement scale field 1062B.

With regard to the generic vector friendly instruction format 1000, a full opcode field 1074 is shown including the format field 1040, the base operation field 1042, and the data element width field 1064. While one embodiment is shown where the full opcode field 1074 includes all of these fields, the full opcode field 1074 includes less than all of these fields in embodiments that do not support all of them. The full opcode field 1074 provides the operation code (opcode).

The augmentation operation field 1050, the data element width field 1064, and the write mask field 1070 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

**Figure 11A** is a block diagram illustrating an exemplary specific vector friendly instruction format according to embodiments of the invention. **Figure 11A** shows a specific vector friendly instruction format 1100 that is specific in the sense that it specifies the location, size, interpretation, and order of the fields, as well as values for some of those fields. The specific vector friendly instruction format 1100 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 10** into which the fields from **Figure 11A** map are illustrated.

It should be understood that, although embodiments of the invention are described with reference to the specific vector friendly instruction format 1100 in the context of the generic vector friendly instruction format 1000 for illustrative purposes, the invention is not limited to the specific vector friendly instruction format 1100 except where claimed. For example, the generic vector friendly instruction format 1000 contemplates a variety of possible sizes for the various fields, while the specific vector friendly instruction format 1100 is shown as having fields of specific sizes. By way of specific example, while the data element width field 1064 is illustrated as a one bit field in the specific vector friendly instruction format 1100, the invention is not so limited (that is, the generic vector friendly instruction format 1000 contemplates other sizes of the data element width field 1064).

The generic vector friendly instruction format 1000 includes the following fields listed below in the order illustrated in **Figure 11A****.**

EVEX Prefix (Bytes 0-3) 1102 - is encoded in a four-byte form.

Format Field 1040 (EVEX Byte 0, bits [7:0]) - the first byte (EVEX Byte 0) is the format field 1040 and it contains 0x62 (the unique value used for distinguishing the vector friendly instruction format in one embodiment of the invention).

The second-fourth bytes (EVEX Bytes 1-3) include a number of bit fields providing specific capability.

REX field 1105 (EVEX Byte 1, bits [7-5]) - consists of a EVEX.R bit field (EVEX Byte 1, bit [7] - R), EVEX.X bit field (EVEX byte 1, bit [6] - X), and 1057BEX byte 1, bit [5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1010 - this is the first part of the REX' field 1010 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1115 (EVEX byte 1, bits [3:0] - mmmm) - its content encodes an implied leading opcode byte (0F, 0F 38, or 0F 3).

Data element width field 1064 (EVEX byte 2, bit [7] - W) - is represented by the notation EVEX.W. EVEX.W is used to define the granularity (size) of the datatype (either 32-bit data elements or 64-bit data elements).

EVEX.vvvv 1120 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 1120 encodes the 4 low-order bits of the first source register specifier stored in inverted (1s complement) form. Depending on the instruction, an extra different EVEX bit field is used to extend the specifier size to 32 registers.

EVEX.U 1068 Class field (EVEX byte 2, bit [2]-U) - If EVEX.U = 0, it indicates class A or EVEX.U0; if EVEX.U = 1, it indicates class B or EVEX.U1.

Prefix encoding field 1125 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1052 (EVEX byte 3, bit [7] - EH; also, known as EVEX.EH, EVEX.rs, EVEX.RL, EVEX.write mask control, and EVEX.N; also, illustrated with α) - as previously described, this field is context specific.

Beta field 1054 (EVEX byte 3, bits [6:4]-SSS, also known as EVEX.s2-0, EVEX.r2-0, EVEX.rr1, EVEX.LL0, EVEX.LLB; also, illustrated with βββ) - as previously described, this field is context specific.

REX' field 1010 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1070 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1130 (Byte 4) is also known as the opcode byte. Part of the opcode is specified in this field.

MOD R/M Field 1140 (Byte 5) includes MOD field 1142, Reg field 1144, and R/M field 1146. As previously described, the MOD field's 1142 content distinguishes between memory access and non-memory access operations. The role of Reg field 1144 can be summarized to two situations: encoding either the destination register operand or a source register operand, or be treated as an opcode extension and not used to encode any instruction operand. The role of R/M field 1146 may include the following: encoding the instruction operand that references a memory address, or encoding either the destination register operand or a source register operand.

Scale, Index, Base (SIB) Byte (Byte 6) - As previously described, the scale field's 1050 content is used for memory address generation. SIB.xxx 1154 and SIB.bbb 1156 - the contents of these fields have been previously referred to with regard to the register indexes Xxxx and Bbbb.

Displacement field 1062A (Bytes 7-10) - when MOD field 1142 contains 10, bytes 7-10 are the displacement field 1062A, and it works the same as the legacy 32-bit displacement (disp32) and works at byte granularity.

Displacement factor field 1062B (Byte 7) - when MOD field 1142 contains 01, byte 7 is the displacement factor field 1062B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1062B is a reinterpretation of disp8; when using displacement factor field 1062B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1062B substitutes the legacy x86 instruction set 8-bit displacement. Thus, the displacement factor field 1062B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 1072 operates as previously described.

**Figure 11B** is a block diagram illustrating the fields of the specific vector friendly instruction format 1100 that make up the full opcode field 1074 according to one embodiment of the invention. Specifically, the full opcode field 1074 includes the format field 1040, the base operation field 1042, and the data element width (W) field 1064. The base operation field 1042 includes the prefix encoding field 1125, the opcode map field 1115, and the real opcode field 1130.

**Figure 11C** is a block diagram illustrating the fields of the specific vector friendly instruction format 1100 that make up the register index field 1044 according to one embodiment of the invention. Specifically, the register index field 1044 includes the REX field 1105, the REX' field 1110, the MODR/M.reg field 1144, the MODR/M.r/m field 1146, the VVVV field 1120, xxx field 1154, and the bbb field 1156.

**Figure 11D** is a block diagram illustrating the fields of the specific vector friendly instruction format 1100 that make up the augmentation operation field 1050 according to one embodiment of the invention. When the class (U) field 1068 contains 0, it signifies EVEX.U0 (class A 1068A); when it contains 1, it signifies EVEX.U1 (class B 1068B). When U=0 and the MOD field 1142 contains 11 (signifying a no memory access operation), the alpha field 1052 (EVEX byte 3, bit [7] - EH) is interpreted as the rs field 1052A. When the rs field 1052A contains a 1 (round 1052A.1), the beta field 1054 (EVEX byte 3, bits [6:4]- SSS) is interpreted as the round control field 1054A. The round control field 1054A includes a one bit SAE field 1056 and a two bit round operation field 1058. When the rs field 1052A contains a 0 (data transform 1052A.2), the beta field 1054 (EVEX byte 3, bits [6:4]- SSS) is interpreted as a three bit data transform field 1054B. When U=0 and the MOD field 1142 contains 00, 01, or 10 (signifying a memory access operation), the alpha field 1052 (EVEX byte 3, bit [7] - EH) is interpreted as the eviction hint (EH) field 1052B and the beta field 1054 (EVEX byte 3, bits [6:4]- SSS) is interpreted as a three bit data manipulation field 1054C.

When U=1, the alpha field 1052 (EVEX byte 3, bit [7] - EH) is interpreted as the write mask control (Z) field 1052C. When U=1 and the MOD field 1142 contains 11 (signifying a no memory access operation), part of the beta field 1054 (EVEX byte 3, bit [4]- S0) is interpreted as the RL field 1057A; when it contains a 1 (round 1057A.1) the rest of the beta field 1054 (EVEX byte 3, bit [6-5]- S2-1) is interpreted as the round operation field 1059A, while when the RL field 1057A contains a 0 (VSIZE 1057.A2) the rest of the beta field 1054 (EVEX byte 3, bit [6-5]- S2-1) is interpreted as the vector length field 1059B (EVEX byte 3, bit [6-5]- L1-0). When U=1 and the MOD field 1142 contains 00, 01, or 10 (signifying a memory access operation), the beta field 1054 (EVEX byte 3, bits [6:4]- SSS) is interpreted as the vector length field 1059B (EVEX byte 3, bit [6-5]- L1-0) and the broadcast field 1057B (EVEX byte 3, bit [4]- B).

**Figure 12** is a block diagram of a register architecture 1200 according to one embodiment of the invention. In the embodiment illustrated, there are 32 vector registers 1210 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1100 operates on these overlaid register file as illustrated in the below tables.

| Adjustable Vector Length | Class | Operations | Registers |
|---|---|---|---|
| Instruction Templates that do not include the vector length field 1059B | A (Figure 10A; U=0) | 1010, 1015, 1025, 1030 | zmm registers (the vector length is 64 byte) |
| | B (Figure 10B; U=1) | 1012 | zmm registers (the vector length is 64 byte) |
| Instruction templates that do include the vector length field 1059B | B (Figure 10B; U=1) | 1017, 1027 | zmm, ymm, or xmm registers (the vector length is 64 byte, 32 byte, or 16 byte) depending on the vector length field 1059B |

In other words, the vector length field 1059B selects between a maximum length and one or more other shorter lengths, where each such shorter length is half the length of the preceding length; and instructions templates without the vector length field 1059B operate on the maximum vector length. Further, in one embodiment, the class B instruction templates of the specific vector friendly instruction format 1100 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1215 - in the embodiment illustrated, there are 8 write mask registers (k0 through k7), each 64 bits in size. In an alternate embodiment, the write mask registers 1215 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 1225 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1245, on which is aliased the MMX packed integer flat register file 1250 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

**Figure 13A** is a block diagram illustrating both an exemplary in-order pipeline and an exemplary register renaming, out-of-order issue/execution pipeline according to embodiments of the invention. **Figure 13B** is a block diagram illustrating both an exemplary embodiment of an in-order architecture core and an exemplary register renaming, out-of-order issue/execution architecture core to be included in a processor according to embodiments of the invention. The solid lined boxes in **Figures 13A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 13A****,** a processor pipeline 1300 includes a fetch stage 1302, a length decode stage 1304, a decode stage 1306, an allocation stage 1308, a renaming stage 1310, a scheduling (also known as a dispatch or issue) stage 1312, a register read/memory read stage 1314, an execute stage 1316, a write back/memory write stage 1318, an exception handling stage 1322, and a commit stage 1324.

**Figure 13B** shows processor core 1390 including a front end unit 1330 coupled to an execution engine unit 1350, and both are coupled to a memory unit 1370. The core 1390 may be a reduced instruction set computing (RISC) core, a complex instruction set computing (CISC) core, a very long instruction word (VLIW) core, or a hybrid or alternative core type. As yet another option, the core 1390 may be a special-purpose core, such as, for example, a network or communication core, compression engine, coprocessor core, general purpose computing graphics processing unit (GPGPU) core, graphics core, or the like.

The front end unit 1330 includes a branch prediction unit 1332 coupled to an instruction cache unit 1334, which is coupled to an instruction translation lookaside buffer (TLB) 1336, which is coupled to an instruction fetch unit 1338, which is coupled to a decode unit 1340. The decode unit 1340 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1390 includes a microcode ROM or other medium that stores microcode for certain macroinstructions (e.g., in decode unit 1340 or otherwise within the front end unit 1330). The decode unit 1340 is coupled to a rename/allocator unit 1352 in the execution engine unit 1350.

The execution engine unit 1350 includes the rename/allocator unit 1352 coupled to a retirement unit 1354 and a set of one or more scheduler unit(s) 1356. The scheduler unit(s) 1356 represents any number of different schedulers, including reservations stations, central instruction window, etc. The scheduler unit(s) 1356 is coupled to the physical register file(s) unit(s) 1358. Each of the physical register file(s) units 1358 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 1358 comprises a vector registers unit, a write mask registers unit, and a scalar registers unit. These register units may provide architectural vector registers, vector mask registers, and general purpose registers. The physical register file(s) unit(s) 1358 is overlapped by the retirement unit 1354 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1354 and the physical register file(s) unit(s) 1358 are coupled to the execution cluster(s) 1360. The execution cluster(s) 1360 includes a set of one or more execution units 1362 and a set of one or more memory access units 1364. The execution units 1362 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1356, physical register file(s) unit(s) 1358, and execution cluster(s) 1360 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1364). It should also be understood that where separate pipelines are used, one or more of these pipelines may be out-of-order issue/execution and the rest in-order.

The set of memory access units 1364 is coupled to the memory unit 1370, which includes a data TLB unit 1372 coupled to a data cache unit 1374 coupled to a level 2 (L2) cache unit 1376. In one exemplary embodiment, the memory access units 1364 may include a load unit, a store address unit, and a store data unit, each of which is coupled to the data TLB unit 1372 in the memory unit 1370. The instruction cache unit 1334 is further coupled to a level 2 (L2) cache unit 1376 in the memory unit 1370. The L2 cache unit 1376 is coupled to one or more other levels of cache and eventually to a main memory.

By way of example, the exemplary register renaming, out-of-order issue/execution core architecture may implement the pipeline 1300 as follows: 1) the instruction fetch 1338 performs the fetch and length decoding stages 1302 and 1304; 2) the decode unit 1340 performs the decode stage 1306; 3) the rename/allocator unit 1352 performs the allocation stage 1308 and renaming stage 1310; 4) the scheduler unit(s) 1356 performs the schedule stage 1312; 5) the physical register file(s) unit(s) 1358 and the memory unit 1370 perform the register read/memory read stage 1314; the execution cluster 1360 perform the execute stage 1316; 6) the memory unit 1370 and the physical register file(s) unit(s) 1358 perform the write back/memory write stage 1318; 7) various units may be involved in the exception handling stage 1322; and 8) the retirement unit 1354 and the physical register file(s) unit(s) 1358 perform the commit stage 1324.

The core 1390 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1390 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register, renaming is described in the context of out-of-order execution, it should be understood that register renaming may be used in an in-order architecture. While the illustrated embodiment of the processor also includes separate instruction and data cache units 1334/1374 and a shared L2 cache unit 1376, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

**Figures 14A-14B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 14A** is a block diagram of a single processor core, along with its connection to the on-die interconnect network 1402 and with its local subset of the Level 2 (L2) cache 1404, according to embodiments of the invention. In one embodiment, an instruction decoder 1400 supports the x86 instruction set with a packed data instruction set extension. An L1 cache 1406 allows low-latency accesses to cache memory into the scalar and vector units. While in one embodiment (to simplify the design), a scalar unit 1408 and a vector unit 1410 use separate register sets (respectively, scalar registers 1412 and vector registers 1414) and data transferred between them is written to memory and then read back in from a level 1 (L1) cache 1406, alternative embodiments of the invention may use a different approach (e.g., use a single register set or include a communication path that allow data to be transferred between the two register files without being written and read back).

The local subset of the L2 cache 1404 is part of a global L2 cache that is divided into separate local subsets, one per processor core. Each processor core has a direct access path to its own local subset of the L2 cache 1404. Data read by a processor core is stored in its L2 cache subset 1404 and can be accessed quickly, in parallel with other processor cores accessing their own local L2 cache subsets. Data written by a processor core is stored in its own L2 cache subset 1404 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 14B** is an expanded view of part of the processor core in **Figure 14A** according to embodiments of the invention. **Figure 14B** includes an L1 data cache 1406A part of the L1 cache 1404, as well as more detail regarding the vector unit 1410 and the vector registers 1414. Specifically, the vector unit 1410 is a 16-wide vector processing unit (VPU) (see the 16-wide ALU 1428), which executes one or more of integer, single-precision float, and double-precision float instructions. The VPU supports swizzling the register inputs with swizzle unit 1420, numeric conversion with numeric convert units 1422A-B, and replication with replication unit 1424 on the memory input. Write mask registers 1426 allow predicating resulting vector writes.

**Figure 15** is a block diagram of a processor 1500 that may have more than one core, may have an integrated memory controller, and may have integrated graphics according to embodiments of the invention. The solid lined boxes in **Figure 15** illustrate a processor 1500 with a single core 1502A, a system agent 1510, a set of one or more bus controller units 1516, while the optional addition of the dashed lined boxes illustrates an alternative processor 1500 with multiple cores 1502A-N, a set of one or more integrated memory controller unit(s) 1514 in the system agent unit 1510, and special purpose logic 1508.

Thus, different implementations of the processor 1500 may include: 1) a CPU with the special purpose logic 1508 being integrated graphics and/or scientific (throughput) logic (which may include one or more cores), and the cores 1502A-N being one or more general purpose cores (e.g., general purpose in-order cores, general purpose out-of-order cores, a combination of the two); 2) a coprocessor with the cores 1502A-N being a large number of special purpose cores intended primarily for graphics and/or scientific (throughput); and 3) a coprocessor with the cores 1502A-N being a large number of general purpose in-order cores. Thus, the processor 1500 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1500 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1506, and external memory (not shown) coupled to the set of integrated memory controller units 1514. The set of shared cache units 1506 may include one or more mid-level caches, such as level 2 (L2), level 3 (L3), level 4 (L4), or other levels of cache, a last level cache (LLC), and/or combinations thereof. While in one embodiment a ring based interconnect unit 1512 interconnects the integrated graphics logic 1508 (integrated graphics logic 1508 is an example of and is also referred to herein as special purpose logic), the set of shared cache units 1506, and the system agent unit 1510/integrated memory controller unit(s) 1514, alternative embodiments may use any number of well-known techniques for interconnecting such units. In one embodiment, coherency is maintained between one or more cache units 1506 and cores 1502-A-N.

In some embodiments, one or more of the cores 1502A-N are capable of multithreading. The system agent 1510 includes those components coordinating and operating cores 1502A-N. The system agent unit 1510 may include for example a power control unit (PCU) and a display unit. The PCU may be or include logic and components needed for regulating the power state of the cores 1502A-N and the integrated graphics logic 1508. The display unit is for driving one or more externally connected displays.

The cores 1502A-N may be homogenous or heterogeneous in terms of architecture instruction set; that is, two or more of the cores 1502A-N may be capable of execution the same instruction set, while others may be capable of executing only a subset of that instruction set or a different instruction set.

**Figures 16-19** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 16****,** shown is a block diagram of a system 1600 in accordance with one embodiment of the present invention. The system 1600 may include one or more processors 1610, 1615, which are coupled to a controller hub 1620. In one embodiment, the controller hub 1620 includes a graphics memory controller hub (GMCH) 1690 and an Input/Output Hub (IOH) 1650 (which may be on separate chips); the GMCH 1690 includes memory and graphics controllers to which are coupled memory 1640 and a coprocessor 1645; the IOH 1650 couples input/output (I/O) devices 1660 to the GMCH 1690. Alternatively, one or both of the memory and graphics controllers are integrated within the processor (as described herein), the memory 1640 and the coprocessor 1645 are coupled directly to the processor 1610, and the controller hub 1620 in a single chip with the IOH 1650.

The optional nature of additional processors 1615 is denoted in **Figure 16** with broken lines. Each processor 1610, 1615 may include one or more of the processing cores described herein and may be some version of the processor 1500.

The memory 1640 may be, for example, dynamic random access memory (DRAM), phase change memory (PCM), or a combination of the two. For at least one embodiment, the controller hub 1620 communicates with the processor(s) 1610, 1615 via a multi-drop bus, such as a frontside bus (FSB), point-to-point interface such as QuickPath Interconnect (QPI), or similar connection 1695.

In one embodiment, the coprocessor 1645 is a special-purpose processor, such as, for example, a high-throughput MIC processor, a network or communication processor, compression engine, graphics processor, GPGPU, embedded processor, or the like. In one embodiment, controller hub 1620 may include an integrated graphics accelerator.

There can be a variety of differences between the physical resources 1610, 1615 in terms of a spectrum of metrics of merit including architectural, microarchitectural, thermal, power consumption characteristics, and the like.

In one embodiment, the processor 1610 executes instructions that control data processing operations of a general type. Embedded within the instructions may be coprocessor instructions. The processor 1610 recognizes these coprocessor instructions as being of a type that should be executed by the attached coprocessor 1645. Accordingly, the processor 1610 issues these coprocessor instructions (or control signals representing coprocessor instructions) on a coprocessor bus or another interconnect, to coprocessor 1645. Coprocessor(s) 1645 accept and execute the received coprocessor instructions.

Referring now to **Figure 17****,** shown is a block diagram of a first more specific exemplary system 1700 in accordance with an embodiment of the present invention. As shown in **Figure 17****,** multiprocessor system 1700 is a point-to-point interconnect system, and includes a first processor 1770 and a second processor 1780 coupled via a point-to-point interconnect 1750. Each of processors 1770 and 1780 may be some version of the processor 1500. In one embodiment of the invention, processors 1770 and 1780 are respectively processors 1610 and 1615, while coprocessor 1738 is coprocessor 1645. In another embodiment, processors 1770 and 1780 are respectively processor 1610 coprocessor 1645.

Processors 1770 and 1780 are shown including integrated memory controller (IMC) units 1772 and 1782, respectively. Processor 1770 also includes, as part of its bus controller units, point-to-point (P-P) interfaces 1776 and 1778; similarly, second processor 1780 includes P-P interfaces 1786 and 1788. Processors 1770, 1780 may exchange information via a point-to-point (P-P) interface 1750 using P-P interface circuits 1778, 1788. As shown in **Figure 17****,** IMCs 1772 and 1782 couple the processors to respective memories, namely a memory 1732 and a memory 1734, which may be portions of main memory locally attached to the respective processors.

Processors 1770, 1780 may each exchange information with a chipset 1790 via individual P-P interfaces 1752, 1754 using point to point interface circuits 1776, 1794, 1786, 1798. Chipset 1790 may optionally exchange information with the coprocessor 1738 via a high-performance interface 1792. In one embodiment, the coprocessor 1738 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1790 may be coupled to a first bus 1716 via an interface 1796. In one embodiment, first bus 1716 may be a Peripheral Component Interconnect (PCI) bus, or a bus such as a PCI Express bus or another third generation I/O interconnect bus, although the scope of the present invention is not so limited.

As shown in **Figure 17****,** various I/O devices 1714 may be coupled to first bus 1716, along with a bus bridge 1718 which couples first bus 1716 to a second bus 1720. In one embodiment, one or more additional processor(s) 1715, such as coprocessors, high-throughput MIC processors, GPGPU's, accelerators (such as, e.g., graphics accelerators or digital signal processing (DSP) units), field programmable gate arrays, or any other processor, are coupled to first bus 1716. In one embodiment, second bus 1720 may be a low pin count (LPC) bus. Various devices may be coupled to a second bus 1720 including, for example, a keyboard and/or mouse 1722, communication devices 1727 and a storage unit 1728 such as a disk drive or other mass storage device which may include instructions/code and data 1730, in one embodiment. Further, an audio I/O 1724 may be coupled to the second bus 1720. Note that other architectures are possible. For example, instead of the point-to-point architecture of **Figure 17****,** a system may implement a multi-drop bus or other such architecture.

Referring now to **Figure 18****,** shown is a block diagram of a second more specific exemplary system 1800 in accordance with an embodiment of the present invention. Like elements in **Figures 17** and **18** bear like reference numerals, and certain aspects of **Figure 17** have been omitted from **Figure 18** in order to avoid obscuring other aspects of **Figure 18****.**

**Figure 18** illustrates that the processors 1770, 1780 may include integrated memory and I/O control logic ("CL") 1772 and 1782, respectively. Thus, the CL 1772, 1782 include integrated memory controller units and include I/O control logic. **Figure 18** illustrates that not only are the memories 1732, 1734 coupled to the CL 1772,1782, but also that I/O devices 1814 are also coupled to the control logic 1772, 1782. Legacy I/O devices 1815 are coupled to the chipset 1790.

Referring now to **Figure 19****,** shown is a block diagram of a SoC 1900 in accordance with an embodiment of the present invention. Similar elements in **Figure 15** bear like reference numerals. Also, dashed lined boxes are optional features on more advanced SoCs. In **Figure 19****,** an interconnect unit(s) 1902 is coupled to: an application processor 1910 which includes a set of one or more cores 1502A-N, which include cache units 1504A-N, and shared cache unit(s) 1506; a system agent unit 1510; a bus controller unit(s) 1516; an integrated memory controller unit(s) 1514; a set or one or more coprocessors 1920 which may include integrated graphics logic, an image processor, an audio processor, and a video processor; an static random access memory (SRAM) unit 1930; a direct memory access (DMA) unit 1932; and a display unit 1940 for coupling to one or more external displays. In one embodiment, the coprocessor(s) 1920 include a special-purpose processor, such as, for example, a network or communication processor, compression engine, GPGPU, a high-throughput MIC processor, embedded processor, or the like.

**Figure 20** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **Figure 20** shows a program in a high level language **2002** may be compiled using an x86 compiler **2004** to generate x86 binary code **2006** that may be natively executed by a processor with at least one x86 instruction set core **2016.** The processor with at least one x86 instruction set core **2016** represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler **2004** represents a compiler that is operable to generate x86 binary code **2006** (e.g., object code) that can, with or without additional linkage processing, be executed on the processor with at least one x86 instruction set core **2016.** Similarly, **Figure 20** shows the program in the high level language **2002** may be compiled using an alternative instruction set compiler **2008** to generate alternative instruction set binary code **2010** that may be natively executed by a processor without at least one x86 instruction set core **2014** (e.g., a processor with cores that execute the MIPS instruction set of MIPS Technologies of Sunnyvale, CA and/or that execute the ARM instruction set of ARM Holdings of Sunnyvale, CA). The instruction converter **2012** is used to convert the x86 binary code **2006** into code that may be natively executed by the processor without an x86 instruction set core **2014.** This converted code is not likely to be the same as the alternative instruction set binary code **2010** because an instruction converter capable of this is difficult to make; however, the converted code will accomplish the general operation and be made up of instructions from the alternative instruction set. Thus, the instruction converter **2012** represents software, firmware, hardware, or a combination thereof that, through emulation, simulation or any other process, allows a processor or other electronic device that does not have an x86 instruction set processor or core to execute the x86 binary code **2006.**

### FURTHER EXAMPLES

**Example 1** provides a processor including: a loop accelerator including a plurality of strand execution circuits, and a binary translator to: receive a plurality of instructions from an instruction storage; determine whether the plurality of instructions include loop instructions; in response to determining that the plurality of instructions does not include loop instructions, receive and process a next set of instructions from the instruction storage, and in response to determining that the plurality of instructions does include loop instructions, divide the loop instructions into two or more jobs using at least one job creation rule, assign the two or more jobs to two or more strands using at least one strand creation rule, and cause the loop accelerator to execute at least two of the two or more strands in parallel using the plurality of strand execution circuits.
**Example 2** includes the substance of the processor of **Example 1,** wherein the loop accelerator further enables the plurality of strand execution circuits to satisfy data dependencies by exchanging data via a register file.
**Example 3** includes the substance of the processor of any one of **Examples 1-2,** wherein the loop accelerator further includes a strand documentation buffer to store strand documentation written by the binary translator for the two or more strands, the strand documentation to include data used to differentiate between and associate a program order among the two or more strands.
**Example 4** includes the substance of the processor of **Example 3,** wherein the strand documentation for the two or more strands further includes at least an instruction pointer to associate an address of an instruction in the loop instructions with the strand, an iteration number to indicate a present loop iteration number of the strand, a register base address used to access registers within the register file, and a loop exit counter to indicate a loop exit point.
**Example 5** includes the substance of the processor of any one of **Examples 1-4,** wherein the binary translator further uses at least one stage creation rule to assign the two or more jobs to two or more stages, the two or more stages to be executed by the loop accelerator in a data flow pipeline.
**Example 6** includes the substance of the processor of any one of **Examples 1-5,** wherein instructions within one strand are to execute in program order, and instructions in different strands are to execute out of program order.
**Example 7** includes the substance of the processor of any one of **Examples 1-6,** wherein instructions included in the two or more strands are to retire in program order.
**Example 8** includes the substance of the processor of any one of **Examples 1-7,** wherein at least one of the at least one job creation rule and the at least one strand creation rule attempt to achieve at least one of maximizing utilization of the plurality of execution circuits, minimizing idle time of any of the plurality of execution circuits, reducing a number of dependences among the two or more strands, and balancing execution rates of the two or more strands.
**Example 9** includes the substance of the processor of any one of **Examples 1-8,** wherein at least one of the at least one job creation rule and the at least one strand creation rule includes placing a producer and a consumer of a non-recurrent loop-carried data flow into different strands.
**Example 10** includes the substance of the processor of any one of **Examples 1-9,** wherein at least one of the at least one job creation rule and the at least one strand creation rule replicates at least one instruction in a plurality of strands in order to decrease a number of cross-strand data flows.
**Example 11** provides a method including: receiving, by a binary translator, a plurality of instructions from an instruction storage; determining, by the binary translator, whether the plurality of instructions include loop instructions, and, in response to determining that they do, dividing the loop instructions into two or more jobs using at least one job creation rule; assigning the two or more jobs to two or more strands using at least one strand creation rule, and causing a loop accelerator to execute at least two of the two or more strands in parallel using a plurality of strand execution circuits.
**Example 12** includes the substance of the method of **Example 11,** wherein instructions within one strand are to execute in program order, and instructions in different strands are to execute out of program order.
**Example 13** includes the substance of the method of any one of **Examples 11-12,** wherein instructions included in the two or more strands are to retire in program order.
**Example 14** includes the substance of the method of any one of **Examples 11-13,** wherein at least one of the at least one job creation rule and the at least one strand creation rule includes placing a data producer instruction having a long latency and its consumers in different strands.
**Example 15** includes the substance of the method of any one of **Examples 11-14,** wherein the at least one strand creation rule includes placing a producer and a consumer of a non-recurrent loop-carried data flow into different strands.
**Example 16** includes the substance of the method of any one of **Examples 11-15,** further including satisfying data dependencies among the plurality of strand execution circuits by exchanging data using a register file.
**Example 17** includes the substance of the method of any one of **Examples 11-16,** further including writing, by the binary translator, strand documentation for the two or more strands into a strand documentation buffer, the strand documentation to include data used at least to differentiate the two or more strands from each other and to associate a program order with the two or more strands.
**Example 18** includes the substance of the method of **Example 17,** wherein the strand documentation for the two or more strands further includes at least an instruction pointer to indicate an address of an instruction in the strand, an iteration number to indicate a present loop iteration number of the strand, a register base address used to access registers within the register file, and a loop exit counter to allow the loop accelerator to detect an exit point.
**Example 19** provides a system including: a memory from which instructions are to be fetched; a loop accelerator including a plurality of strand execution circuits, and a binary translator to: receive a plurality of instructions from the memory; determine whether the plurality of instructions comprise loop instructions, and, in response to determining that they do, divide the loop instructions into two or more jobs using at least one job creation rule; assign the two or more jobs to two or more strands using at least one strand creation rule; and cause the loop accelerator to execute at least two of the two or more strands in parallel using the plurality of strand execution circuits.
**Example 20** includes the substance of the system of **Example 19,** wherein the loop accelerator further enables the plurality of strand execution circuits to satisfy data dependencies by exchanging data via a register file.
**Example 21** includes the substance of the system of any one of **Examples 18-20,** the loop accelerator further including a strand documentation buffer to store strand documentation written by the binary translator for the two or more strands, the strand documentation to include data used to differentiate between and associate a program order among the two or more strands.
**Example 22** includes the substance of the system of **Example 21,** the strand documentation for the two or more strands further to include at least an instruction pointer to associate an address of an instruction in the loop instructions with the strand, an iteration number to indicate a present loop iteration number of the strand, a register base address used to access registers within the register file, and a loop exit counter to indicate a loop exit point.
**Example 23** includes the substance of the system of any one of **Examples 19-22,** wherein binary translator further uses at least one stage creation rule to assign the two or more jobs to two or more stages, the two or more stages to be executed by the loop accelerator in a data flow pipeline.
**Example 24** includes the substance of the system of any one of **Examples 19-23,** wherein instructions within one strand are to execute in program order, and instructions in different strands are to execute out of program order.
**Example 25** includes the substance of the system of **Example 24,** wherein instructions included in the two or more strands are to retire in program order.
**Example 26** includes the substance of the system of any one of **Examples 19-25,** wherein at least one of the at least one job creation rule and the at least one strand creation rule attempt to achieve at least one of maximizing utilization of the plurality of execution circuits, minimizing idle time of any of the plurality of execution circuits, reducing a number of dependences among the two or more strands, and balancing execution rates of the two or more strands.
**Example 27** includes the substance of the system of any one of **Examples 19-26,** wherein at least one of the at least one job creation rule and the at least one strand creation rule includes placing a producer and a consumer of a non-recurrent loop-carried data flow into different strands.
**Example 28** includes the substance of the system of any one of **Examples 19-27,** wherein at least one of the at least one job creation rule and the at least one strand creation rule replicates at least one instruction in a plurality of strands in order to decrease a number of cross-strand data flows.
**Example 29** provides an apparatus including: a loop accelerator including a plurality of strand execution circuits, and a binary translator including: means for receiving a plurality of instructions from an instruction storage; means for determining whether the plurality of instructions include loop instructions, and means for dividing the loop instructions, when the plurality of instructions include loop instructions, into two or more strands to be executed by the loop accelerator in parallel.
**Example 30** includes the substance of the apparatus of **Example 29,** further including means for executing a plurality of strands in parallel.
**Example 31** provides a non-transitory machine-readable, tangible medium, having stored therein instructions, which, when executed by a machine, cause the machine to perform: receiving, by a binary translator, a plurality of instructions from an instruction storage; determining, by the binary translator, whether the plurality of instructions include loop instructions, and, in response to determining that they do, dividing the loop instructions into two or more jobs using at least one job creation rule; assigning the two or more jobs to two or more strands using at least one strand creation rule, and causing a loop accelerator to execute at least two of the two or more strands in parallel using a plurality of strand execution circuits.
**Example 32** includes the substance of the non-transitory machine-readable, tangible medium of **Example 31,** wherein instructions within one strand are to execute in program order, and instructions in different strands are to execute out of program order.
**Example 33** includes the substance of the non-transitory machine-readable, tangible medium of any one of **Examples 31-32,** wherein instructions included in the two or more strands are to retire in program order.
**Example 34** includes the substance of the non-transitory machine-readable, tangible medium of any one of **Examples 31-33,** wherein at least one of the at least one job creation rule and the at least one strand creation rule includes placing a data producer instruction having a long latency and its consumers in different strands.
**Example 35** includes the substance of the non-transitory machine-readable, tangible medium of any one of **Examples 31-34,** wherein the at least one strand creation rule includes placing a producer and a consumer of a non-recurrent loop-carried data flow into different strands.
**Example 36** includes the substance of the non-transitory machine-readable, tangible medium of any one of **Examples 31-35,** further including satisfying data dependencies among the plurality of strand execution circuits by exchanging data using a register file.
**Example 37** includes the substance of the non-transitory machine-readable, tangible medium of any one of **Examples 31-36,** further including writing, by the binary translator, strand documentation for the two or more strands into a strand documentation buffer, the strand documentation to include data used at least to differentiate the two or more strands from each other and to associate a program order with the two or more strands.
**Example 38** includes the substance of the non-transitory machine-readable, tangible medium of **Example 37,** wherein the strand documentation for the two or more strands further includes at least an instruction pointer to indicate an address of an instruction in the strand, an iteration number to indicate a present loop iteration number of the strand, a register base address used to access registers within the register file, and a loop exit counter to allow the loop accelerator to detect an exit point.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Although some embodiments disclosed herein involve data handling and distribution in the context of hardware execution circuits, other embodiments can be accomplished by way of a data or instructions stored on a non-transitory machine-readable, tangible medium, which, when performed by a machine, cause the machine to perform functions consistent with at least one embodiment. In one embodiment, functions associated with embodiments of the present disclosure are embodied in machine-executable instructions. The instructions can be used to cause a general-purpose or special-purpose processor that is programmed with the instructions to perform the steps of the at least one embodiment. Embodiments disclosed herein are provided as a computer program product or software which includes a machine or computer-readable medium having stored thereon instructions which are used to program a computer (or other electronic devices) to perform one or more operations according to the at least one embodiment. Alternatively, steps of some embodiments are performed by specific hardware components that contain fixed-function logic for performing the steps, or by any combination of programmed computer components and fixed-function hardware components.

Instructions used to program logic to perform the at least one embodiment can be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the non-transitory computer-readable medium includes any type of tangible machine-readable medium suitable for storing or transmitting electronic instructions or information in a form readable by a machine (e.g., a computer).

## Claims

1. A processor comprising:
a loop accelerator comprising a plurality of strand execution circuits; and
a binary translator to:
receive a plurality of instructions from an instruction storage;
determine whether the plurality of instructions comprise loop instructions;
in response to determining that the plurality of instructions does not comprise loop instructions, receive and process a next set of instructions from the instruction storage; and
in response to determining that the plurality of instructions does comprise loop instructions, divide the loop instructions into two or more jobs using at least one job creation rule, assign the two or more jobs to two or more strands using at least one strand creation rule, and cause the loop accelerator to execute at least two of the two or more strands in parallel using the plurality of strand execution circuits.

2. The processor of claim 1, wherein the loop accelerator further enables the plurality of strand execution circuits to satisfy data dependencies by exchanging data via a register file.

3. The processor of any one of claims 1-2, wherein the loop accelerator further comprises a strand documentation buffer to store strand documentation written by the binary translator for the two or more strands, the strand documentation to include data used to differentiate between and associate a program order among the two or more strands.

4. The processor of claim 3, wherein the strand documentation for the two or more strands further comprises at least an instruction pointer to associate an address of an instruction in the loop instructions with the strand, an iteration number to indicate a present loop iteration number of the strand, a register base address used to access registers within the register file, and a loop exit counter to indicate a loop exit point.

5. The processor of any one of claims 1-4, wherein the binary translator further uses at least one stage creation rule to assign the two or more jobs to two or more stages, the two or more stages to be executed by the loop accelerator in a data flow pipeline.

6. The processor of any one of claims 1-5, wherein instructions within one strand are to execute in program order, and instructions in different strands are to execute out of program order.

7. The processor of any one of claims 1-6, wherein instructions included in the two or more strands are to retire in program order.

8. A method comprising:
receiving, by a binary translator, a plurality of instructions from an instruction storage;
determining, by the binary translator, whether the plurality of instructions comprise loop instructions, and, in response to determining that they do, dividing the loop instructions into two or more jobs using at least one job creation rule;
assigning the two or more jobs to two or more strands using at least one strand creation rule; and
causing a loop accelerator to execute at least two of the two or more strands in parallel using a plurality of strand execution circuits.

9. The method of claim 8, wherein instructions within one strand are to execute in program order, and instructions in different strands are to execute out of program order.

10. The method of any one of claims 8-9, wherein instructions included in the two or more strands are to retire in program order.

11. A system comprising:
a memory from which instructions to be fetched;
a loop accelerator comprising a plurality of strand execution circuits; and
a binary translator to:
receive a plurality of instructions from the memory;
determine whether the plurality of instructions comprise loop instructions, and, in response to determining that they do, divide the loop instructions into two or more jobs using at least one job creation rule;
assign the two or more jobs to two or more strands using at least one strand creation rule; and
cause the loop accelerator to execute at least two of the two or more strands in parallel using the plurality of strand execution circuits.

12. The system of claim 11, wherein the loop accelerator further enables the plurality of strand execution circuits to satisfy data dependencies by exchanging data via a register file.

13. An apparatus comprising:
a loop accelerator comprising a plurality of strand execution circuits; and
a binary translator comprising:
means for receiving a plurality of instructions from an instruction storage;
means for determining whether the plurality of instructions comprise loop instructions; and
means for dividing the loop instructions, when the plurality of instructions comprise loop instructions. into two or more strands to be executed by the loop accelerator in parallel.

14. The apparatus of claim 13, further comprising means for executing a plurality of strands in parallel.

15. Machine-readable storage including machine-readable instructions, when executed, to implement a method or realize an apparatus as claimed in any preceding claim.
